(19) Europäisches Patentamt
European Patent Office
Office européen des brevets

(11) Veröffentlichungsnummer : **0 022 753**
**B1**

(12) # EUROPÄISCHE PATENTSCHRIFT

(45) Veröffentlichungstag der Patentschrift : **03.11.82**

(51) Int. Cl.³ : **G 03 C 1/485**, C 09 B 23/12

(21) Anmeldenummer : **80810226.3**

(22) Anmeldetag : **11.07.80**

(54) **Trinukleare halogenierte Cyaninfarbstoffe, Verfahren zu ihrer Herstellung, ihre Verwendung als Sensibilisatoren in direktpositiven photographischen Materialien, direktpositives photographisches Material mit einem Gehalt an trinuklearen halogenierten Cyaninfarbstoffen und Verwendung des direktpositiven photographischen Materials zur Herstellung direktpositiver Bilder.**

(30) Priorität : **17.07.79 CH 6632/79**
**19.10.79 CH 9418/79**

(43) Veröffentlichungstag der Anmeldung :
**21.01.81 (Patentblatt 81/03)**

(45) Bekanntmachung des Hinweises auf die Patenterteilung : **03.11.82 Patentblatt 82/44**

(84) Benannte Vertragsstaaten :
**BE CH DE FR GB IT LI**

(56) Entgegenhaltungen :
**DE A 2 540 957**
**DE B 2 057 617**
**GB A 1 498 876**
**US A 3 501 309**

(73) Patentinhaber : **CIBA-GEIGY AG**
**Patentabteilung Postfach**
**CH-4002 Basel (CH)**

(72) Erfinder : **Steiger, Rolf, Dr.**
**Russille**
**CH-1724 Praroman (CH)**
Erfinder : **Reber, Jean François, Dr.**
**Impasse de la Colline 2**
**CH-1723 Marly (CH)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

EP 0 022 753 B1

Trinukleare halogenierte Cyaninfarbstoffe, Verfahren zu ihrer Herstellung, ihre Verwendung als Sensibilisatoren in direktpositiven photographischen Materialien, direktpositives photographisches Material mit einem Gehalt an trinuklearen halogenierten Cyaninfarbstoffen und Verwendung des direktpositiven photographischen Materials zur Herstellung direktpositiver Bilder.

Die vorliegende Erfindung betrifft neue halogenierte trinukleare Cyaninfarbstoffe und ihre Verwendung als Sensibilisatoren in direktpositiven photographischen Materialien, die in mindestens einer Schicht eine auf chemischen Wege oder durch Belichtung oberflächerverschleierte Silberhalogenidemulsion enthalten.

Es ist bekannt, dass verschleierte Silberhalogenidemulsionen, an deren Oberfläche ein Elektronenakzeptor adsorbiert ist, sich zur Herstellung von direktpositiven photographischen Materialien eignen. Derartige direktpositive Emulsionen und die aus ihnen hergestellten photographischen Materialien sind aus zahlreichen Patentpublikationen bekannt, beispielsweise aus den US-A-3 501 306, 3 501 307, 3 501 309, 3 501 310, 3 501 311, 3 501 312, 3 782 959, 3 804 632, 3 826 656, 3 923 524, 3 925 085, 3 933 505 und 3 933 506. Derartige Emulsionen und die daraus hergestellten photographischen Materialien zeigen jedoch in der Regel unbefriedigende Empfindlichkeiten.

Es hat deshalb nicht an Versuchen gefehlt, die Empfindlichkeit von solchen direktpositiven Systemen zu verbessern.

So ist z.B. in der US-A-3 583 870 die Verwendung eines sensibilisierenden Gemisches aus Bispyridiniumsalzen und Sensibilisatorfarbstoffen aus der Klasse der Methin- und Azacyaninfarbstoffe beschrieben. Aehnliche Wirkungen sollen auch mit den in der US-A-3 970 461 beschriebenen Carbocyaninen mit einem oder zwei Indoleninkernen erzielt werden. Die erzielten Effekte vermögen jedoch noch nicht in allen Punkten zu überzeugen.

In der amerikanischen Patentschrift 3 501 309 (E-28 258) wird die Verwendung von Halogenierungsprodukten einfacher Cyanine als Sensibilisatoren in oberflächenverschleierten Direktpositivemulsionen beschrieben. Diese halogenierten Cyanine besitzen jedoch den Nachteil einer sehr geringen Lagerbeständigkeit.

Aufgabe der vorliegenden Erfindung ist es nun neue direktpositive Silberhalogenidemulsionen bereitzustellen, die nach dem Prinzip der Oberflächenverschleierung arbeiten und die durch Verwendung neuer Sensibilisatoren eine erhöhte Empfindlichkeit, insbesondere Eigen- bzw. Blauempfindlichkeit aufweisen.

Die gestellte Aufgabe wird erfindungsgemäss dadurch gelöst, dass man neue halogenierte trinukleare Tetramethincyaninfarbstoffe in direktpositiven photographischen Materialien verwendet.

Gegenstand der vorliegenden Erfindung ist daher ein direktpositives photographisches Material mit mindestens einer Schicht, die eine auf chemischem Weg oder durch Belichtung oberflächenverschleierte Silberhalogenidemulsion und einen Sensibilisator enthält, dadurch gekennzeichnet, dass der Sensibilisator ein trinuklearer Tetramethincyaninfarbstoff ist, in dem die Methinwasserstoffatome ganz oder teilweise durch Fluor-, Chlor-, Brom- oder Jodatome ersetzt sind.

Gegenstand der vorliegenden Erfindung sind ferner die Verwendung des photographischen Materials zur Herstellung direktpositiver Bilder, ein Verfahren zur Herstellung direktpositiver Bilder durch bildmässige Belichtung und Entwicklung des erfindungsgemässen direktpositiven photographischen Materials sowie die nach diesem Verfahren hergestellten direktpositiven Bilder ; ferner auch die neuen halogenierten trinuklearen Tetramethincyaninfarbstoffe, Verfahren zu ihrer Herstellung sowie ihre Verwendung in direktpositiven photographischen Materialien.

In der folgenden Beschreibung sind unter « halogenierten trinuklearen Tetramethincyaninfarbstoffen » ganz oder teilweise halogensubstituierte trinukleare Tetramethincyaninfarbstoffe zu verstehen.

Die halogenierten trinuklearen Tetramethincyaninfarbstoffe entsprechen insbesondere den Formeln

(1) 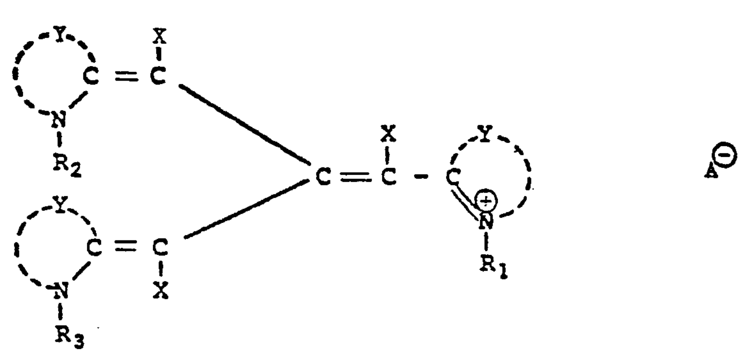

(2)

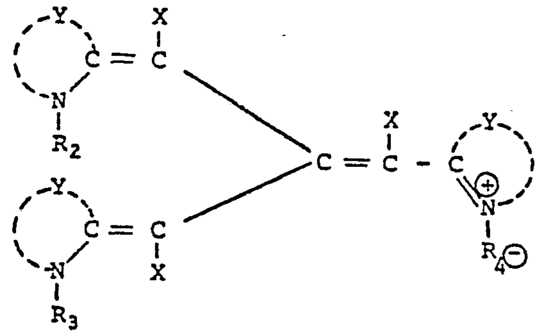

(3)

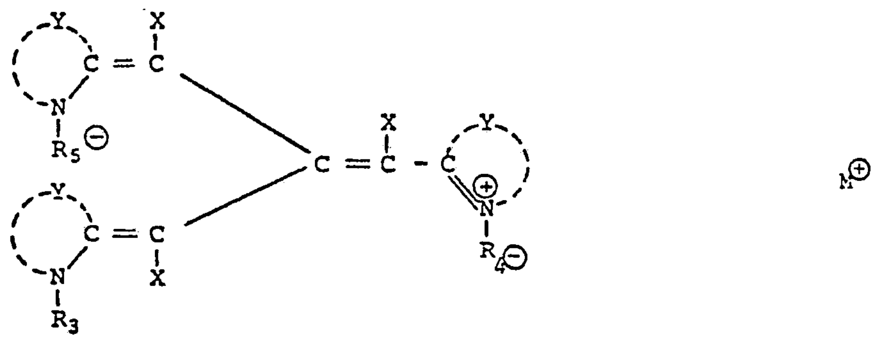

(4a)

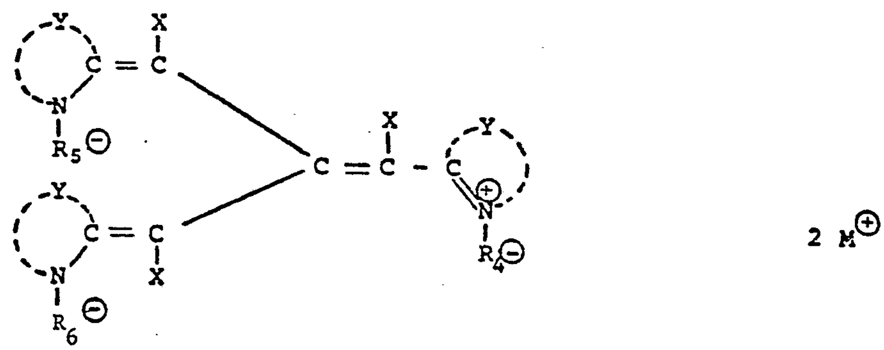

oder

(4b)

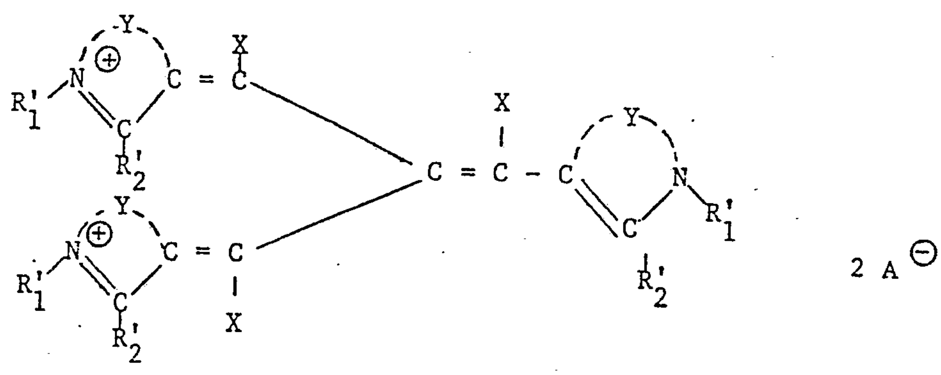

worin

Y die zur Vervollständigung eines mono- oder polyheterocyclischen, gegebenenfalls substituierten Ringsystems erforderlichen Atome,

$R_1$, $R_2$ und $R_3$ je unsubstituiertes oder mit Halogen, Hydroxyl, Cyan, Alkoxy mit 1 bis 4 Kohlenstoffatomen, Carbalkoxy mit 1 bis 4 Kohlenstoffatomen im Alkoxyrest, substituiertes Alkyl mit 1 bis 20 Kohlenstoffatomen oder Alkenyl mit 2 bis 20, vorzugsweise 1 bis 4 Kohlenstoffatomen in der Hauptkette, unsubstituiertes oder mit Halogen, Hydroxyl, Cyan, Alkoxy mit 1 bis 4 Kohlenstoffatomen,

Carbalkoxy mit 1 bis 4 Kohlenstoffatomen im Alkoxyrest, Alkyl, Hydroxyalkyl oder Halogenalkyl mit 1 bis 4 Kohlenstoffatomen, Mono- oder Dialkylamino-, Amino-, Carbonamido- oder Sulfonamidogruppen substituiertes Aryl oder Aralkyl,

$R'_1$ Alkyl und 1 bis 4 Kohlenstoffatomen, insbesondere Methyl oder Aethyl,

$R'_2$ Aryl, insbesondere Phenyl,

$R_4$, $R_5$ und $R_6$ je mit einer Carboxyl- oder Sulfogruppe substituiertes Alkyl mit 1-20 Kohlenstoffatomen oder Alkenyl mit 2 bis 20 Kohlenstoffatomen, Aryl, vorzugsweise Phenyl oder Aralkyl, vorzugsweise Benzyl oder Phenyläthyl,

X Wasserstoff, Fluor, Chlor, Brom oder Jod, wobei mindestens ein Substituent X eines der genannten Halogenatome ist,

$A^{\ominus}$ ein einwertiges Anion und

$M^{\oplus}$ ein einwertiges Kation

bedeuten. Es handelt sich also um Verbindungen, die (in der Methankette) mono- oder di- sowie trihalogeniert sind.

Bevorzugt sind solche trinuklearen Tetramethincyaninfarbstoffe der Formeln (1)-(4), in denen alle Substituenten X eines der oben genannten Halogenatome bedeuten.

Geeignete Substituenten an den genannten Alkyl- oder Alkenylresten ($R_1$, $R_2$, $R_3$), die vorzugsweise 1 (2) bis 4 Kohlenstoffatome enthalten, sind beispielsweise Halogen (Fluor, Chlor, Brom), Hydroxyl, Cyan, Alkoxy mit 1 bis 4 Kohlenstoffatomen, Carbalkoxy mit 1 bis 4 Kohlenstoffatomen im Alkoxyrest ; als Substituenten am Aryl und Aralkyl, die insbesondere Phenyl oder Phenyläthyl sind, kommen die gleichen Substituenten in Frage, ferner auch Alkyl, Hydroxyalkyl oder Halogenalkyl mit je 1 bis 4 Kohlenstoffatomen, sowie $-NH_2$, $-CONH_2$ oder $-SO_2NH_2$, die am Stickstoffatom auch mit Alkyl ($C_1$-$C_4$) substituiert sein können.

$R_4$, $R_5$ und $R_5$, die gleich oder verschieden sein können, sind mit Carboxyl (COOH oder $COO^{\ominus}$) oder der Sulfogruppe ($SO_3H$ oder $-SO_3^{\ominus}$) substituiertes Alkyl oder Alkenyl, Aryl oder Aralkyl, worin Alkyl oder Alkenyl beispielsweise keine Änderungen bis zu 4 Kohlenstoffatome enthalten und Aryl oder Aralkyl vorzugsweise Phenyl, Benzyl oder Phenyläthyl sind.

Bevorzugte Substituenten $R_1$ bis $R_3$ sind Methyl, Aethyl, n-Propyl, n-Butyl, iso-Butyl, Allyl, β-Methallyl, β-Methoxyäthyl, β-Aethoxyäthyl, β-Hydroxyäthyl, γ-Hydroxypropyl, Phenyl, Benzyl oder β-Phenyläthyl. Bevorzugte Substituenten $R_4$ bis $R_6$ sind Carboxymethyl, Carboxyäthyl, Carboxypropyl, Carboxybutyl, Sulfoäthyl, Sulfopropyl, Sulfobutyl, p-Sulfobenzyl, Carbomethoxymethyl oder -äthyl oder Carboäthoxymethyl- oder -äthyl.

Als mono- oder polycyclische heterocyclische Ringsysteme kommen insbesondere solche mit 1 bis 4, vorzugsweise kondensierten Ringen in Frage, von denen mindestens ein Ring heterocyclisch ist. Ringsysteme mit 5- und/oder 6-gliedrigen Ringen sind bevorzugt, z.B. 5- oder 6-gliedrige heterocyclische Ringe mit gegebenenfalls ankondensierten, gegebenenfalls substituierten Benzolringen.

Sie können gegebenenfalls weitere Substituenten (zusätzlich zu $R_1$, $R_2$, $R_3$, $R_4$, $R_5$ und $R_6$) aufweisen, z.B. Alkyl ($C_1$-$C_4$), insbesondere Methyl, Aryl, insbesondere, Phenyl oder Halogenalkyl ($C_1$-$C_4$), insbesondere Trifluormethyl.

Bevorzugte heterocyclische Ringsysteme sind durch die nachfolgenden Formeln angegeben. Aus Gründen der Einfachheit wird jeweils nur eine mesomere Struktur angegeben. R hat die für $R_1$ bis $R_6$ angegebenen Bedeutungen, Z ist Fluor, Chlor, Brom oder Methoxy-

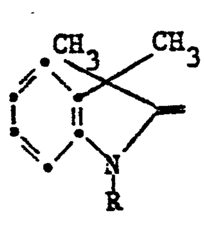, insbesondere 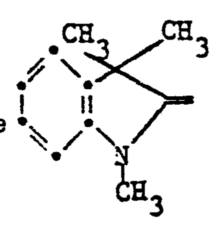, 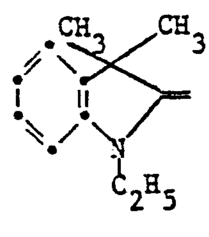, 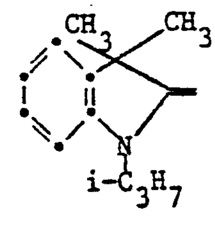,

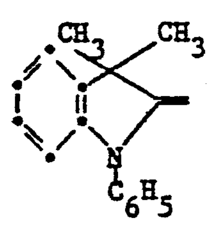 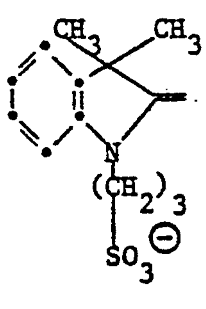; oder 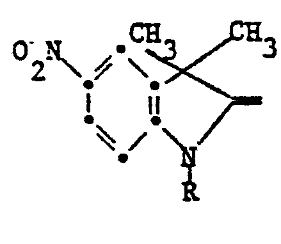; ferner

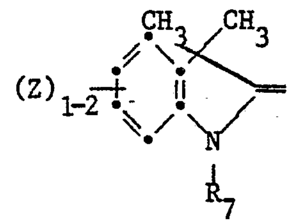 , insbesondere 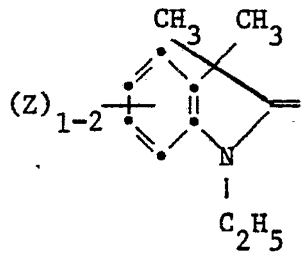 und

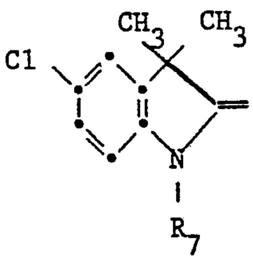

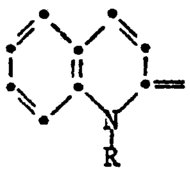 insbesondere 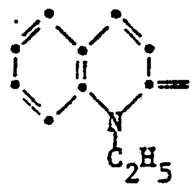 , 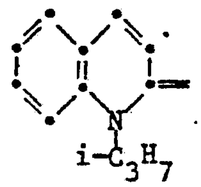 oder 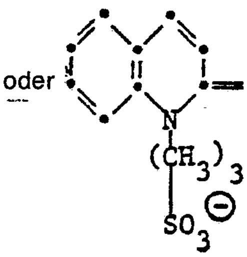

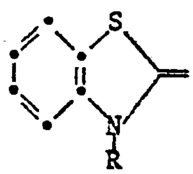 insbesondere 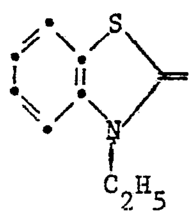 , 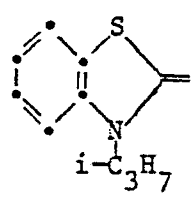 oder 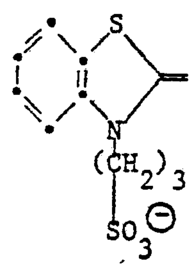

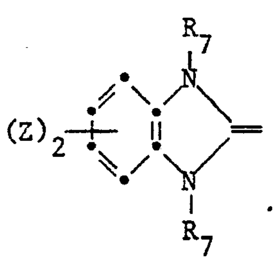 , insbesondere 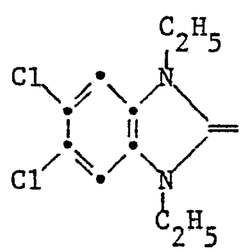

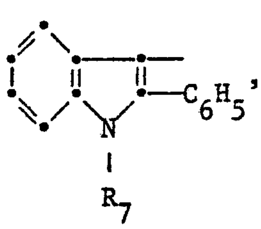 , insbesondere 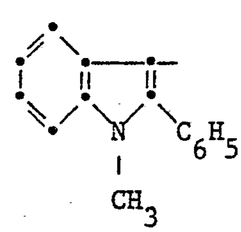

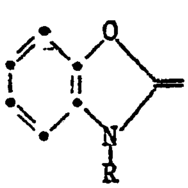 insbesondere 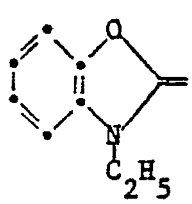 , 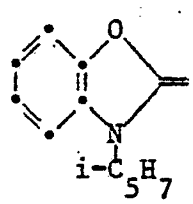 oder 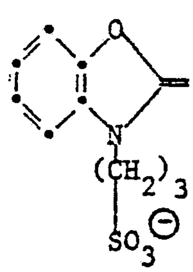

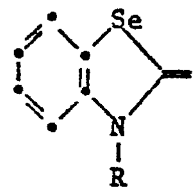 insbesondere 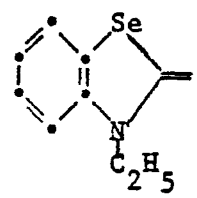 , 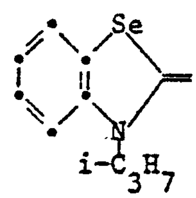 oder 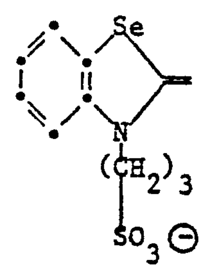

; 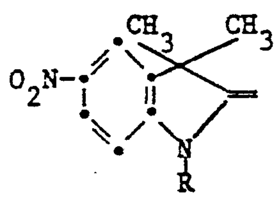 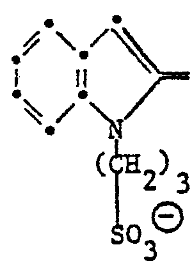 oder 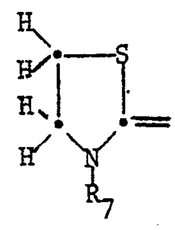 ;

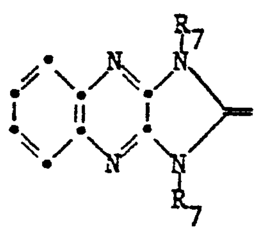 insbesondere 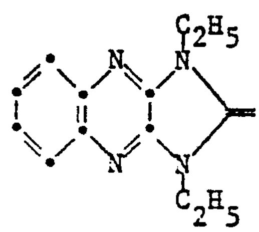 oder 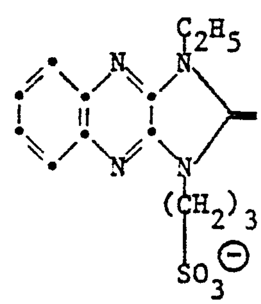

($R_7$ = Alkyl mit 1 bis 4 Kohlenstoffatomen)

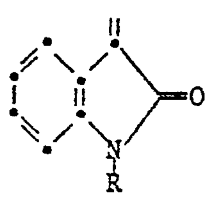 insbesondere 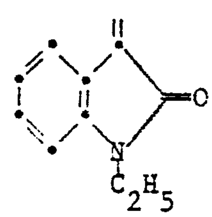 oder 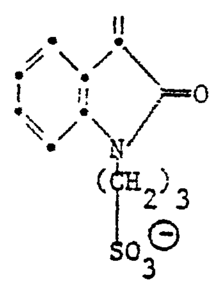

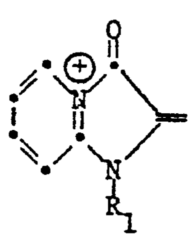 insbesondere 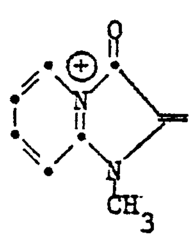 oder 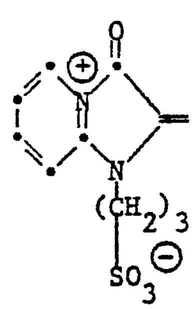

ferner 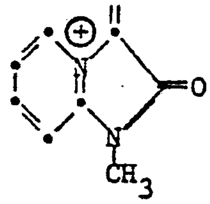 oder 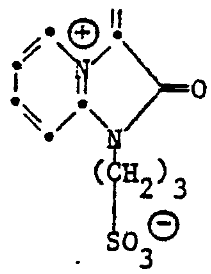

weitere geeignete Heterocyclen entsprechen den folgenden Formeln :

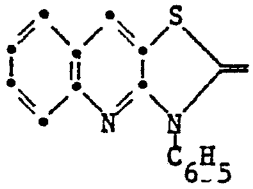
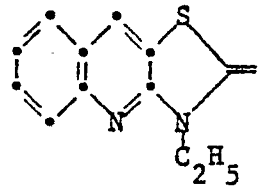
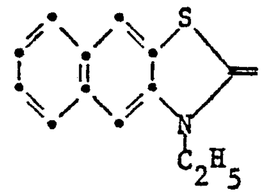

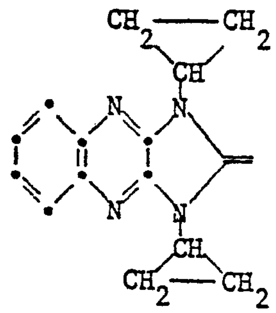
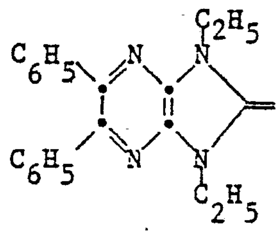
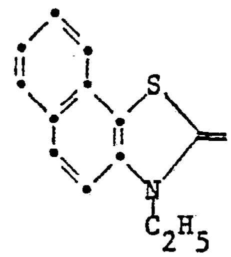

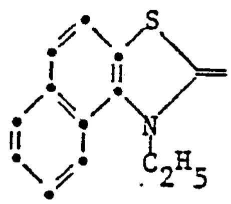
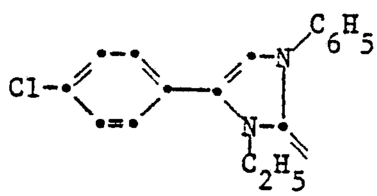
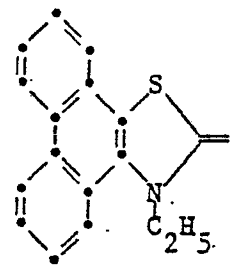

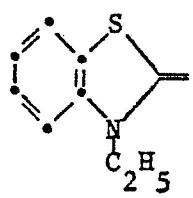
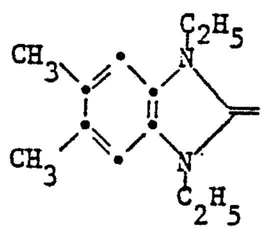
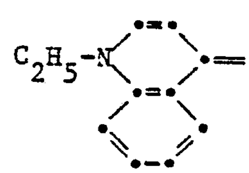
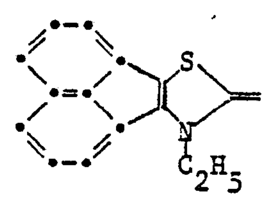

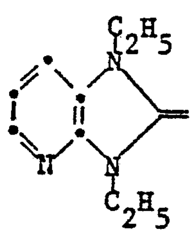
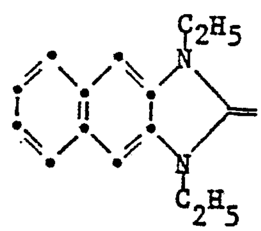
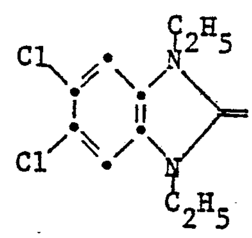
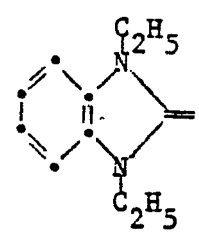

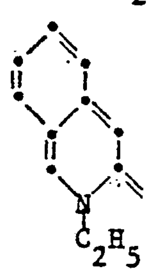
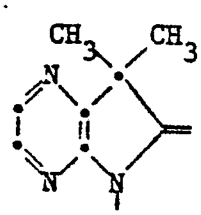
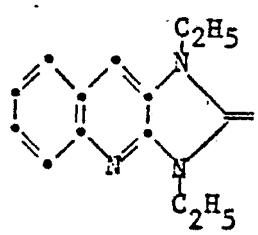
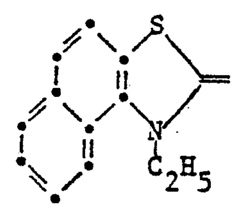

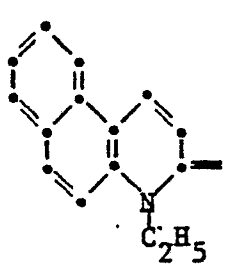
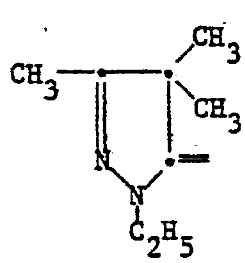
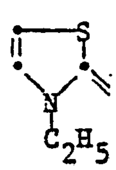
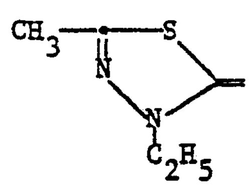

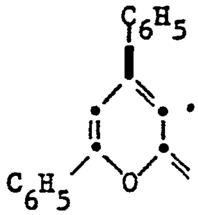
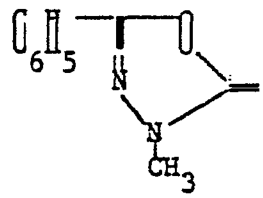
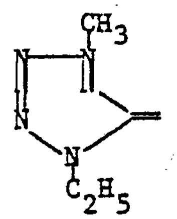
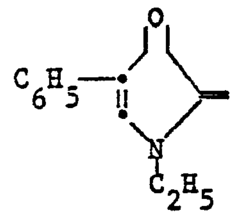

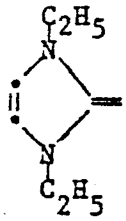
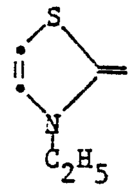
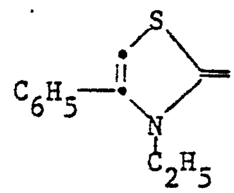
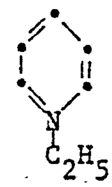
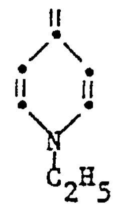

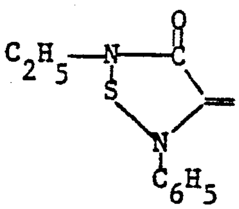
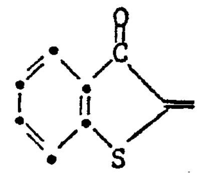
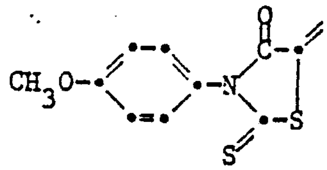
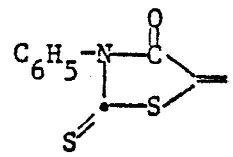

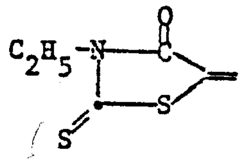
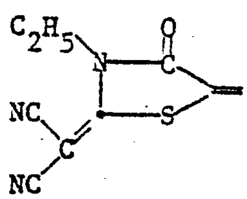
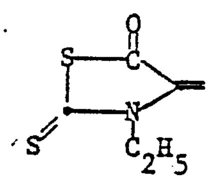
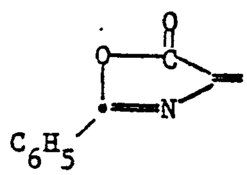

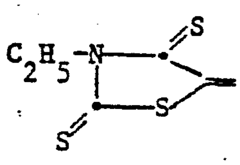
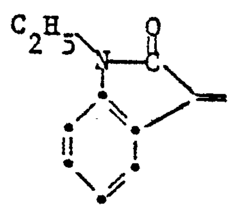
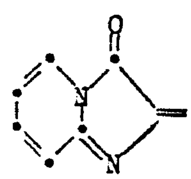
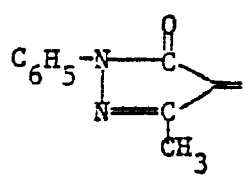

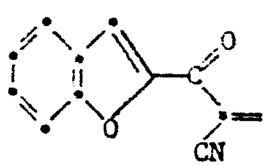
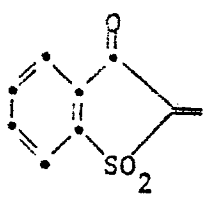
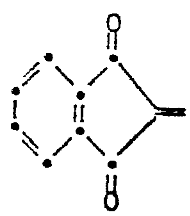
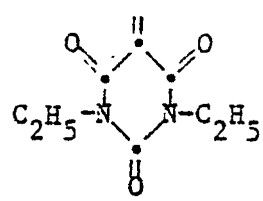

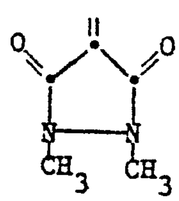
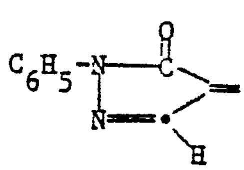
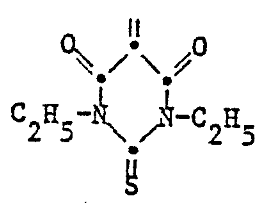
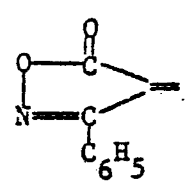

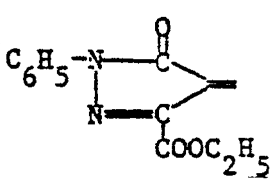
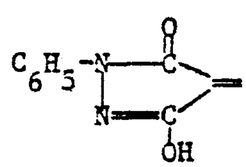
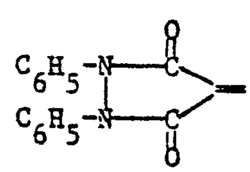

Die vorgenannten Heterocyclen mit Betainstrukturen, z.B. $-(CH_2)_n-COO^{\ominus}-$ oder $-(CH_2)_nSO_3^{\ominus}-$Substituenten an einem Stickstoffatom, sind ebenfalls geeignet (n = 1-4).

Die für die Herstellung von Cyaninfarbstoffen geeigneten Heterocyclen sind z.B. aus D.M. Sturmer, Syntheses and Properties of Cyanine and Related Dyes in Chemistry of Heterocyclic Compounds, Vol. 30, (1977), herausgegeben von A. Weissberger und E.C. Taylor bekannt.

Besonders bevorzugte halogenierte trinukleare Tetramethincyaninfarbstoffe entsprechen den Formeln

(5)

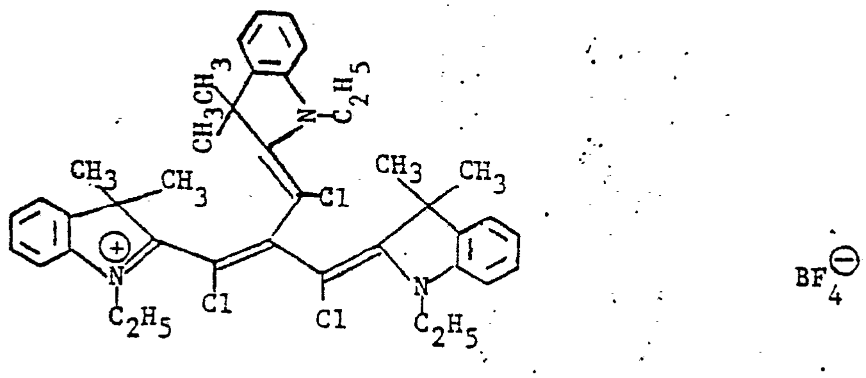

(6)

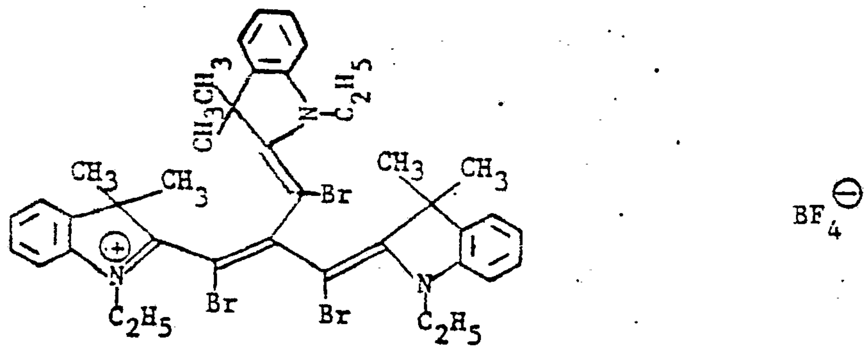

(7)

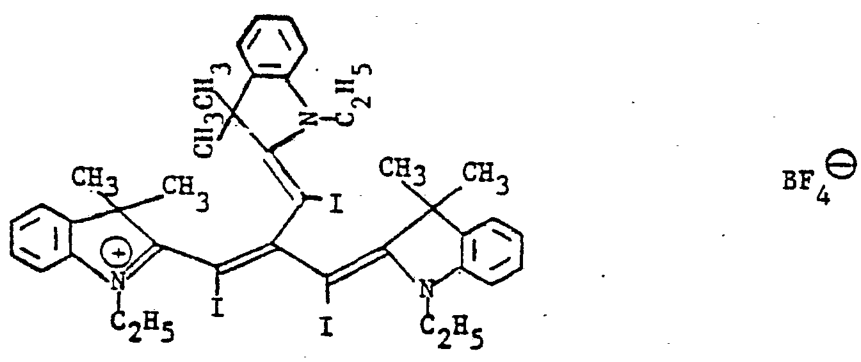

(8)

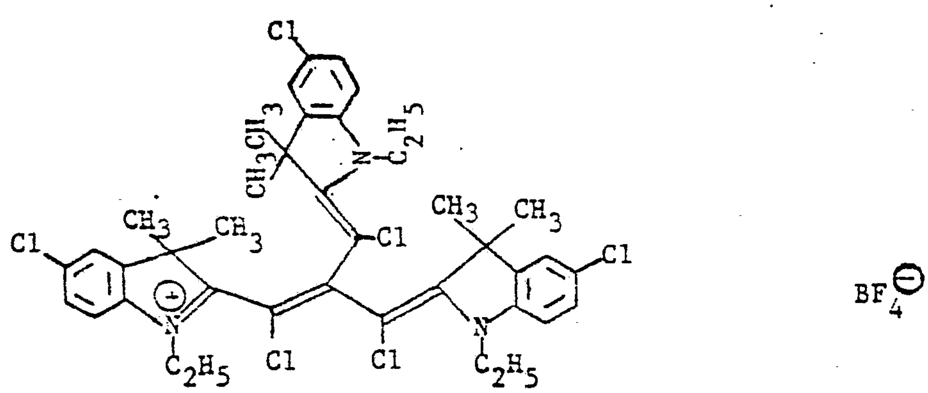

(9)

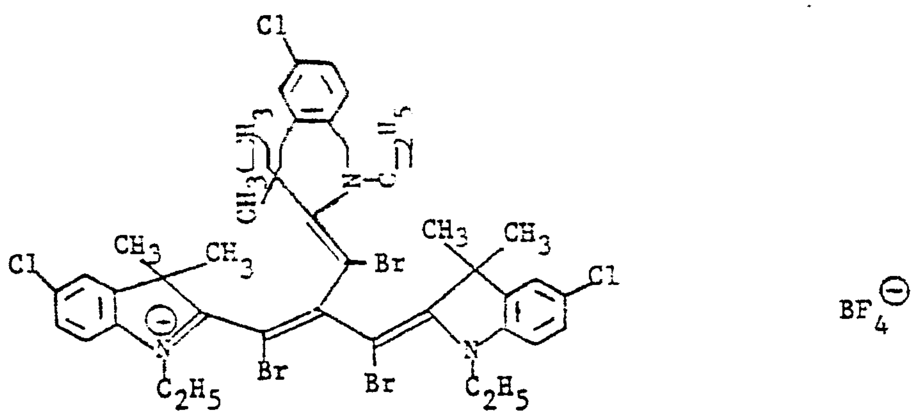

(10)

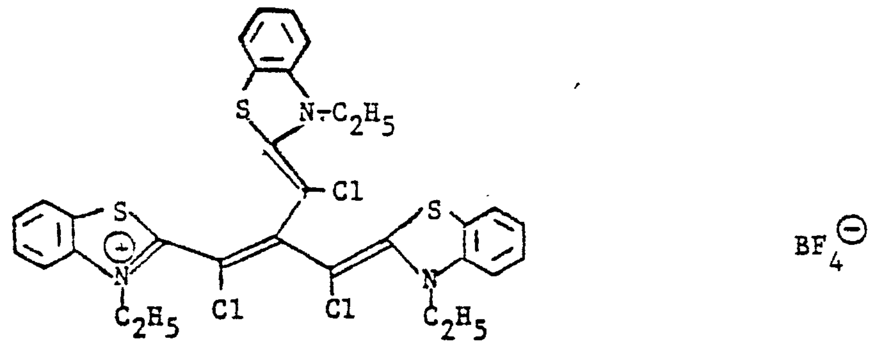

sowie die der Formel (10) analoge Tribromverbindung ;

(11)

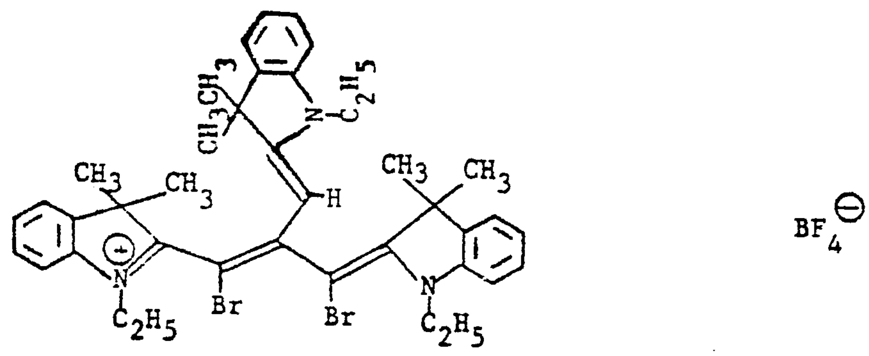

(12)

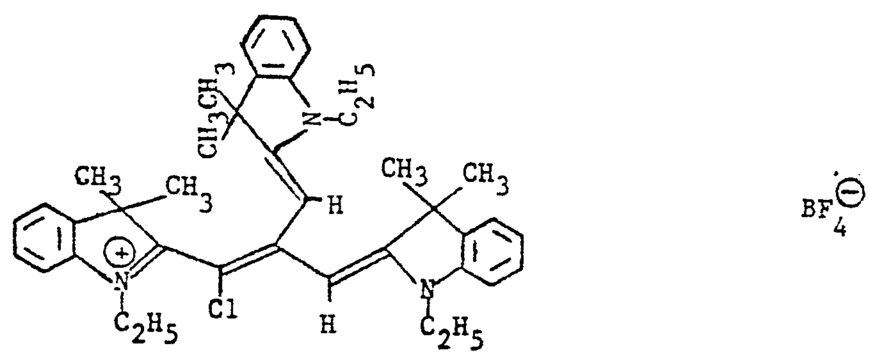

(13)

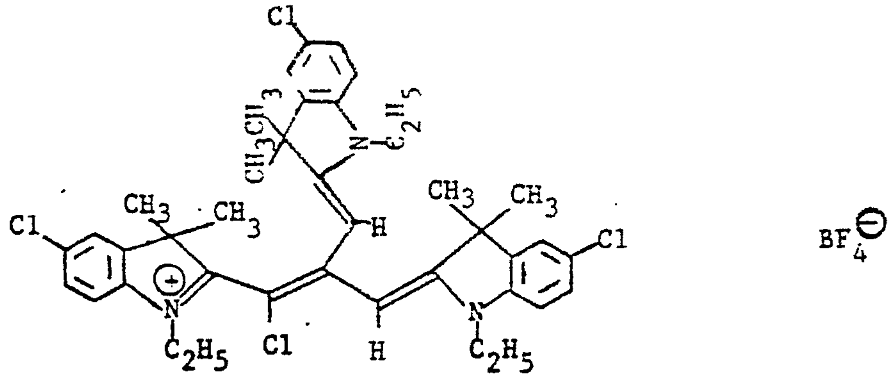

(14) 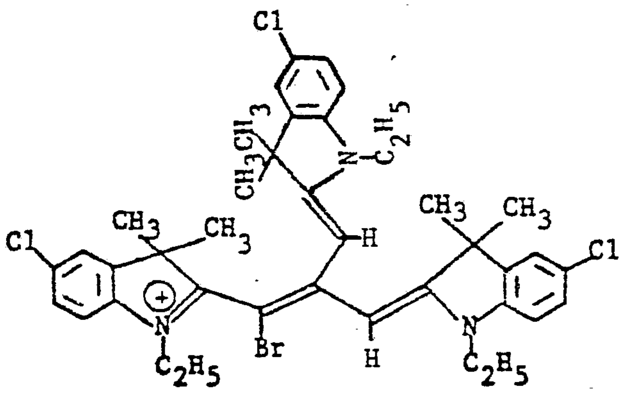 $BF_4^{\ominus}$

(15) 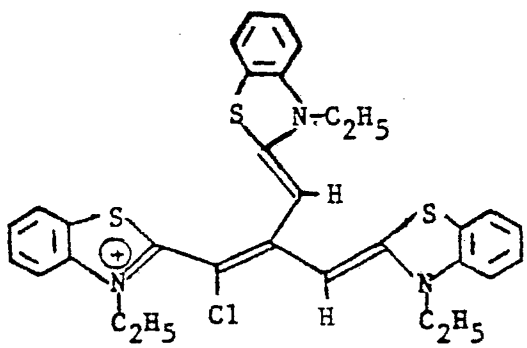 $BF_4^{\ominus}$

(16) 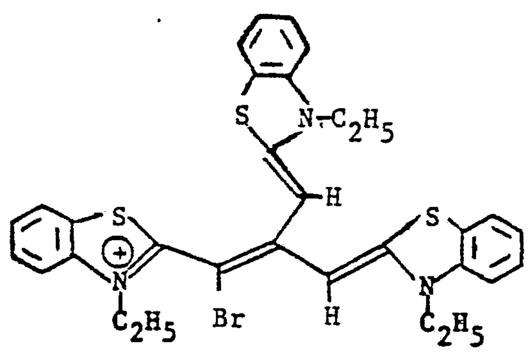 $BF_4^{\ominus}$

ferner auch die Verbindungen der Formeln

(17) 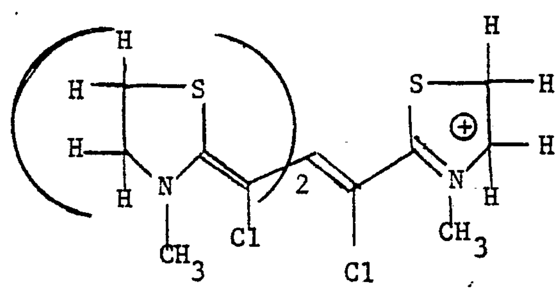 $BF_4^{\ominus}$

sowie die entsprechende Bromverbindung ;

(18) 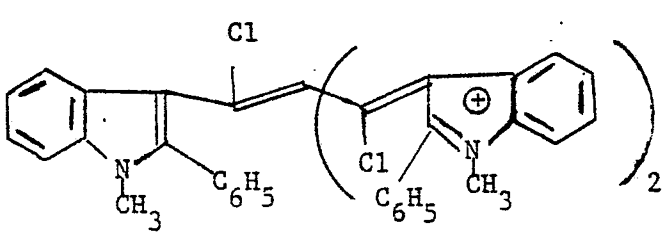 $2BF_4^{\ominus}$.

sowie die entsprechende Bromverbindung.

Als Anionen $A^{\ominus}$ in den Verbindungen der Formel (1) kommen insbesondere die Halogenide, wie Chlorid, Bromid oder Jodid, ferner Nitrat, Tetrafluorborat, Perchlorat, Rhodanid und p-Toluolsulfonat,

sowie Hydrogensulfat in Betracht.

Die einwertigen Kationen ($M^{\oplus}$ in den Verbindungen der Formel (3) und (4)) sind beispielsweise Wasserstoff, Alkalimetalle (Natrium, Kalium), Ammonium oder gegebenenfalls substituiertes Ammonium.

Synthese und Eigenschaften von trinuklearen, jedoch nicht halogenierten Cyaninfarbstoffen sind beschrieben in C. Reichhardt und W. Mormann, Chem. Ber. 105, 1815 (1972) ; C. Reichhardt und K. Halbritter, Chem. Ber. 104, 822 (1971) ; F. Bear und H. Oehling, Org. Magnet. Resonance 6, 421 (1974) ; C. Reichhardt, Tetrahedrom Letters 1967, 4327.

Die erfindungsgemässen halogenierten trinuklearen Tetramethincyaninfarbstoffe werden aus bekannten Cyaninfarbstoffen durch Halogenierung mit üblichen Halogenierungsmitteln erhalten. Geeignete Halogenierungsmittel, die in gegebenenfalls wässrigen Alkohollösungen (Methanol, Aethanol) eingesetzt werden, sind z.B. N-Chlorsuccinimid, N-Bromsuccinimid, N-Jodsuccinimid oder Halogen-Pyrrolidon Komplexe ; ferner N-Chlorbenzotriazol und Chlorjod.

Die Empfindlichkeit der erfindungsgemässen direktpositiven photographischen Materialien kann weiter dadurch gesteigert werden, dass man ausser den erwähnten halogenierten trinuklearen Tetramethincyaninen zusätzlich noch weitere übliche, von den halogenierten trinuklearen Cyaninen verschieden Sensibilisierungsfarbstoffe in den photographischen Materialien verwendet. Als solche weiteren Sensibilisierungsfarbstoffe sind z.B. die üblichen Mono- oder Polymethinfarbstoffe, wie saure oder basische Cyanine, Hemicyanine, Streptocyanine, Merocyanine, Oxonole, Hemioxonole oder Styrylfarbstoffe geeignet. Derartige Sensibilisatoren sind beispielsweise von F.M. Hamer « The Cyanine Dyes and Related Compounds » (1964), Interscience Publishers John Wiley and Sons beschrieben.

Bevorzugt sind saure oder basische in der Regel zweikernige symmetrische Cyaninfarbstoffe, die gegebenenfalls substituierte Benzimidazol-, Benzoxazol-, Benzthiazol-, Benzselenazol-, Indol- und/oder Chinolinreste enthalten. Als Substituenten an diesen heterocyclischen Resten können Alkyl mit 1 bis 18 Kohlenstoffatome, Halogen, insbesondere Chlor und Brom, Amino, Alkylamino mit 1 bis 4 Kohlenstoffatomen, Alkoxyalkyl mit 1 bis 4 Kohlenstoffatomen im Alkyl- und Alkoxyteil, Halogenalkyl mit 1 bis 4 Kohlenstoffatomen, z.B. Trifluormethyl, Nitro, Aryl, insbesondere Phenyl, Carboxyalkyl mit 1 bis 4 Kohlenstoffatomen im Alkylteil und Sulfoalkyl mit 1 bis 4 Kohlenstoffatomen im Alkylteil in Frage kommen. Im einzelnen seien die folgenden Cyaninfarbstoffe genannt, die als zusätzliche Sensibilisierungsfarbstoffe geeignet sind :

(19)

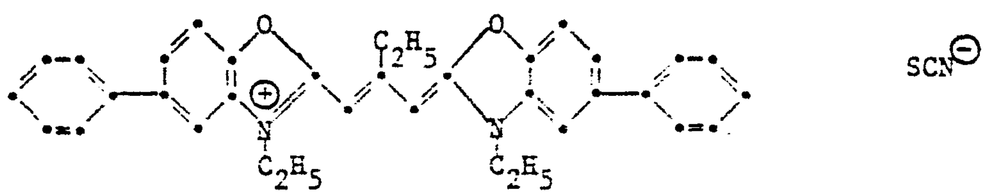

Absorptionsmaximum in der Emulsion : 555 nm (aggregiert, J-Bande)

(20)

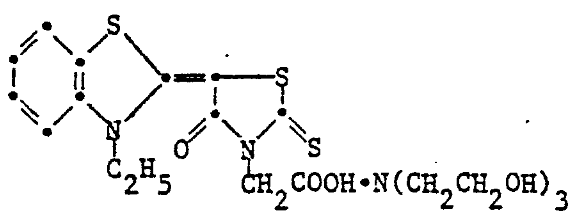

Absorptionsmaximum in der Emulsion : 465 nm (monomer)

(21)

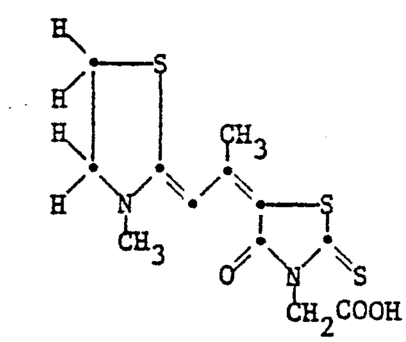

Absorptionsmaximum in der Emulsion : 535 nm

(22) 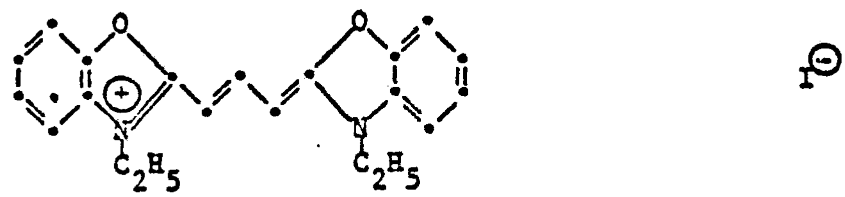

Absorptionsmaximum in der Emulsion : 515 nm

Die besonderen Vorteile der erfindungsgemässen direktpositiven Emulsionen und der zu ihrer Herstellung verwendeten halogenierten trinuklearen Tetramethincyaninfarbstoffe sind :

1. Geringe Eigenfärbung der sensibilisierten Emulsionen.
2. Direkte Verwendbarkeit der halogenierten trinuklearen Tetramethincyaninfarbstoffe als positiv wirkende Sensibilisierungsfarbstoffe in Emulsionen mit verschleierten Silberhalogenidkristallen.
3. Gute Verträglichkeit der halogenierten trinuklearen Tetramethincyaninfarbstoffe mit anderen spektralen Sensibilisierungsfarbstoffen, wobei eine normale Sensibilisierung im Eigenbereich des zusätzlichen Sensibilisierungsfarbstoffes erhalten wird.
4. Ausgezeichnete photographische Eigenschaften, insbesondere eine hohe Maximaldichte und verschwindend kleine Minimaldichte.
5. Hohe Stabilität (chemische oder Dunkelstabilität) der erfindungsgemässen halogenierten trinuklearen Tetramethincyaninfarbstoffe im Vergleich zu bekannten halogenierten dinuklearen Cyaninfarbstoffen (US-A-3 501 309).
6. Erhöhte Blau- bzw. Eigenempfindlichkeit der erfindungsgemässen Cyaninfarbstoffe im Vergleich zu nicht-halogenierten trinuklearen Cyaninfarbstoffen.

Die für die Erfindung verwendbaren Emulsionen sind die üblichen photographischen Emulsionen aus Silberchlorid, -bromid oder -jodid sowie Gemischen dieser Halogenide, wobei die Anteile der verschiedenen Halogenide in weiten Grenzen schwanken können. Geeignete Emulsionen sind z.B. in den amerikanischen Patentschriften 3 501 305, 3 501 306, 3 531 288 und 3 501 290 beschrieben. Ausserdem können auch aufgedampfte Schichten von Silberhalogenid auf geeigneten Trägern erfindungsgemäss zu direktpositiven Materialien verarbeitet werden.

Die Oberflächenverschleierung des Silberhalogenids kann z.B. durch Belichtung oder auf chemischen Wege mit den üblichen Verschleierungsmitteln erfolgen, z.B. mit Reduktionsmitteln, wie Natrium-Formaldehyd-Sulfoxylat, Hydrazin, Zinn (II)-Salzen oder Thioharnstoffdioxid. Besonders günstig ist die gleichzeitige Verwendung eines Reduktionsmittels zusammen mit einem Metall, das edler ist als Silber, z.B. Rhodium, Gold usw., wie dies beispielsweise bei T.H. James « The Theory of the Photographic Process », S. 189, 4. Aufl. 1977, oder in der amerikanischen Patentschrift 3 501 307 beschrieben ist.

Zur Herstellung photographischer Materialien werden die verschleierten und erfindungsgemässen mit einem halogenierten trinuklearen Tetramethincyaninfarbstoff sowie gegebenenfalls spektralen Sensibilisierungsfarbstoffen versehenen Emulsionen auf eine geeignete Unterlage aus Glas, Papier oder Kunststoff in dünner Schicht vergossen, wobei übliche weitere Hilfsmittel, wie z.B. Stabilisatoren, Netzmittel, Härter, Weichmacher, hydrophile Kolloide und Dispersionen von Polymeren zugefügt werden können, um die Beschichtung zu erleichtern und/oder den photographischen Schichten die gewünschten physikalischen Eigenschaften zu verleihen. Die photographischen Materialien können ausser der oder den lichtempfindlichen Schichten noch weitere Schichten, wie Schutzschichten, Filterschichten, Lichthofschutzschichten, sowei ferner Schichten mit weiteren bildwirksamen Bestandteilen, wie Farbkupplern oder bleichbaren Farbstoffen, enthalten.

In den nachfolgenden Beispielen beziehen sich Teile und Prozente auf das Gewicht sofern nichts anderes angegeben.

## Herstellungsbeispiele

### Beispiel 1

Farbstoff der Formel (5)

0,65 g (1 mMol) der Verbindung der Formel

(101)

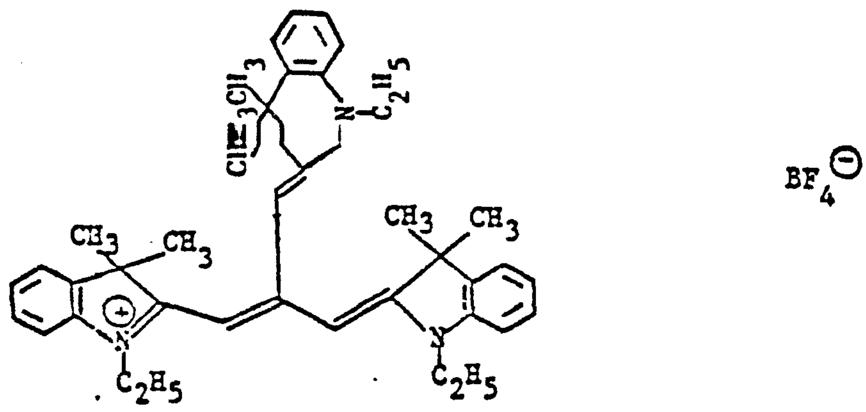

Herstellung nach C. Reichhardt und W. Mormann, Chem. Ber. *105,* 1815 (1972) (Lit. a) werden in 100 ml Methanol bei 40 °C gelöst. Nach Abkühlung auf Raumtemperatur wird tropfenweise eine Lösung von 0,51 g (3,3 mMol) N-Chlorbenzotriazol in 20 ml Methanol, entsprechend einem Ueberschuss von 10 %, zugesetzt. Die Lösung wird während einer Stunde bei Raumtemperatur gerührt, danach mittels eines Rotationsverdampfers eingedampft. Der blaue Rückstand wird bei 20 °C in 50 ml Aceton gelöst. Nach Zusatz von 10 g $NaBF_4$, gelöst in 20 ml Wasser fällt der Farbstoff der Formel (5) aus. Man kühlt auf 0 °C, filtriert unter Vakuum ab und wäscht auf dem Filter mit bidestilliertem Wasser nach. Man trocknet bei 70 °C ; danach wird noch einmal in Aceton gelöst und die Ausfällung mit $NaBF_4$ wiederholt.

Man erhält den Farbstoff der Formel (5) in einer Ausbeute von 95 % bezogen auf das Ausgangsprodukt der Formel (101). Absorptionsmaximum in Methanol : $\lambda$ max = 627 nm, molarer Extinktionskoefficient : $\varepsilon = 3{,}04 \cdot 10^4$ 1 $Mol^{-1}$ $cm^{-1}$. Weitere Charakterisierung durch Absorptionsspektroskopie (UV, sichtbarer Bereich und IR), $^1H$-NMR-Spektrum, Elementaranalyse und Dünnschichtchromatogramm.

Beispiel 2

Farbstoff der Formel (6)

2,15 g (3,3 mMol) der Verbindung der Formel (101) werden in 200 ml Methanol gelöst. Danach wird unter Rühren bei Raumtemperatur eine Lösung von 1,8 g N-Brom-Succinimid (10 mMol) in 50 ml Aceton während 30 Minuten tropfenweise zugegeben. Man rührt während einer Stunde weiter bei Raumtemperatur und gibt nochmals eine Lösung von 0,18 g N-Bromsuccinimid in 5 ml Aceton zu (Ueberschuss total 10 %). Man rührt weiter während 10 Minuten und dampft danach mittels eines Rotationsverdampfers zur Trockne ein. Der blaue Rückstand wird in 30 ml warmem Aceton aufgenommen.

Nach Zufügen von 15 g $NaBF_4$, gelöst in 20 ml bidestilliertem Wasser fällt der Farbstoff der Formel (6) aus. Man kühlt auf 0 °C und filtriert ab. Man wäscht mit bidestilliertem Wasser nach, trocknet den Filterrückstand bei 70 °C und löst nochmals in Aceton. Die Fällung mit $NaBF_4$ wird einmal wiederholt. Man erhält schliesslich, nach nochmaliger Trocknung, 2,90 g des Farbstoffs der Formel (6), entsprechend einer Ausbeute von 97 %.

Absorptionsmaximum in Methanol : $\lambda$ max = 644 nm, $\varepsilon = 1{,}62 \cdot 10^4$ 1 $Mol^{-1}$ $cm^{-1}$. Weitere Charakterisierung des Farbstoffs der Formel (6) durch Absorptionsspektroskopie, sowie röntgenfluorometrische Brombestimmung, Elementaranalyse und Dünnschichtchromatographie.

Analog wird auch der Farbstoff der Formel (9) hergestellt.

Analog zu den Herstellungsvorschriften für die Tetramethincyaninfarbstoffe der Formeln (5) und (6) werden auch die Farbstoffe der folgenden Formel hergestellt :

(102)

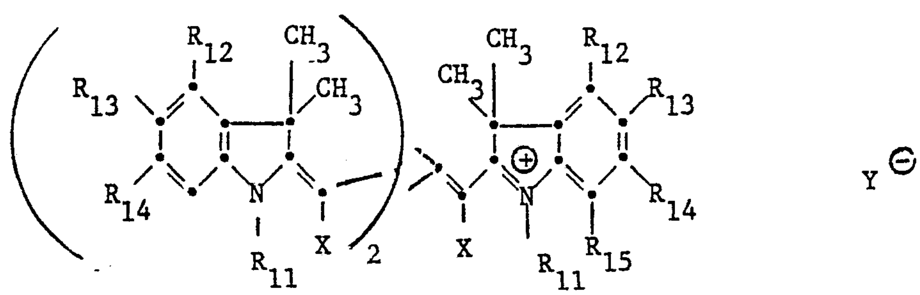

Tabelle I

| $R_{11}$ | $R_{12}$ | $R_{13}$ | $R_{14}$ | $R_{15}$ | $Y^{\ominus}$ | X |
|---|---|---|---|---|---|---|
| $C_2H_5$ | H | H | H | H | $BF_4$ | Cl, Br |
| $CH_3$ | H | H | H | H | $BF_4$ | Cl, Br |
| $CH_3$ | H | H | H | H | $ClO_4$ | Cl, Br |
| $C_2H_5$ | H | Cl | H | H | $BF_4$ | Cl, Br |
| $C_2H_5$ | H | H | H | Cl | $BF_4$ | Cl, Br |
| $CH_3$ | H | F | H | H | $BF_4$ | Cl, Br |
| $C_2H_5$ | H | F | H | H | $BF_4$ | Cl, Br |
| $C_2H_5$ | H | Br | H | H | $BF_4$ | Cl, Br |
| $C_2H_5$ | H | $CH_3O$ | H | H | $BF_4$ | Cl, Br |
| $CH_3$ | Cl | H | Cl | H | $BF_4$ | Cl, Br |
| $CH_3$ | Cl | H | H | Cl | $BF_4$ | Cl, Br |
| $CH_3$ | H | Cl | H | Cl | $BF_4$ | Cl, Br |

Beispiel 3

Farbstoff der Formel (7)

473,5 mg der Verbindung der Formel (101) werden in 100 ml Methanol bei Raumtemperatur gelöst und danach unter Rühren mit einer Lösung von 386 mg Chlorjod in Methanol entsprechend einem Ueberschuss von 10 % während einer Stunde umgesetzt. Nach Eindampfen am Rotationsverdampfer erhält man einen blauen Rückstand, der in 50 ml Aceton bei 50 °C aufgelöst und nach Abkühlen auf Raumtemperatur mit einer Lösung von 10 g $NaBF_4$ in 20 ml bidestilliertem Wasser behandelt wird. Man kühlt auf 0 °C ; der ausgefallene Farbstoff der Formel (7) wird abgenutscht, mit bidestilliertem Wasser gewaschen, und die Auflösung und Ausfällung wie in den vorstehenden Beispielen noch einmal wiederholt. Nach der Trocknung erhält man den Farbstoff der Formel (7) in einer Ausbeute von 80 %.

Absorptionsmaximum $\lambda$ max = 606 nm (in Methanol), $\varepsilon = 3{,}24 \cdot 10^4$ 1 $Mol^{-1}$ $cm^{-1}$. Weitere Charakterisierung des Farbstoffs der Formel (7) durch Absorptionsspektroskopie (UV, sichtbarer Bereich und IR), Elementaranalyse und Dünnschichtchromatographie.

Beispiel 4

Farbstoff der Formel (8)

200 mg der Verbindung der Formel (103) (Synthese gemäss Lit. a)

(103)

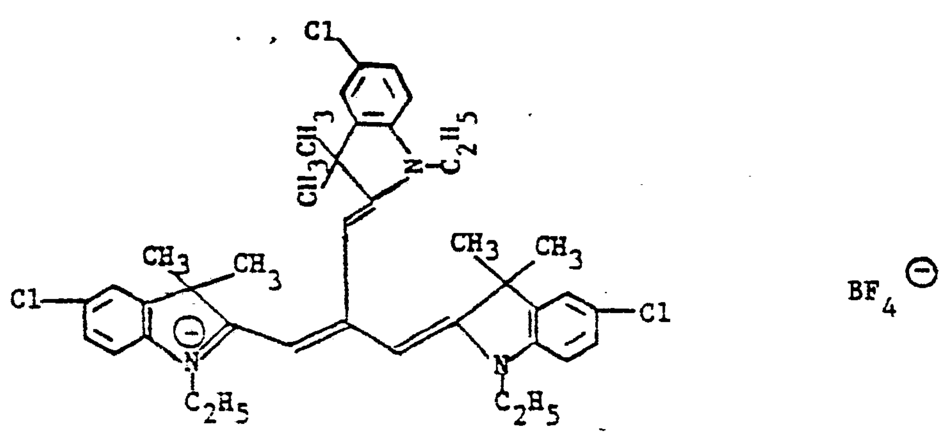

werden bei 60 °C in 200 ml Methanol gelöst. Nach Abkühlen auf Raumtemperatur wird eine Lösung von 150 mg N-Chlorbenzotriazol in 20 ml Methanol, entsprechend einem Ueberschuss von 10 % zugetropft. Das Gemisch wird während einer Stunde bei Raumtemperatur weitergerührt, danach mittel eines Rotationsverdampfers zur Trockene verdampft und gleich, wie in den vorstehenden Beispielen beschreiben, wiederholt in Aceton aufgenommen, mittels $NaBF_4$ ausgefällt, filtriert und mit bidestilliertem Wasser gewaschen. Man erhält den Farbstoff der Formel (8) in einer Ausbeute von 90 % der Theorie.

Absorptionsmaximum in Methanol : $\lambda$ max = 635 nm, $\varepsilon = 2{,}40 \cdot 10^4$ 1 $Mol^{-1}$ $cm^{-1}$. Weitere Charakterisierung durch Absorptionsspektroskopie (UV, sichtbarer Bereich und IR), $^1$H-NMR, und Elementaranalyse. Die Reinheit wurde durch Dünnschichtchromatographie bestätigt.

Beispiel 5

Verbindung der Formel (10)

a) Eine Suspension von 5,0 g 3-Aethyl-2-methyl-benzothiazoliumjodid, 1,2 g Tris-(methylthio)-methyltetrafluorborat, hergestellt gemäss Tetrahedron Lett. *1967*, 2747, und 3,2 g Triäthylamin in 30 ml absolutem Acetonitril werden in einem Einschlussrohr während 4 Stunden auf 100 °C erhitzt. Nach Erkalten wird das Reaktionsgemisch mit 400 ml Diäthyläther verdünnt ; der Niederschlag wird abgesaugt und anschliessend über einer Säule mit 150 g Kieselgel chromatographiert. (Fliessmittel Chloroform-Isopropanol v/v 15 : 5). Man erhält die Verbindung der Formel .

(104) 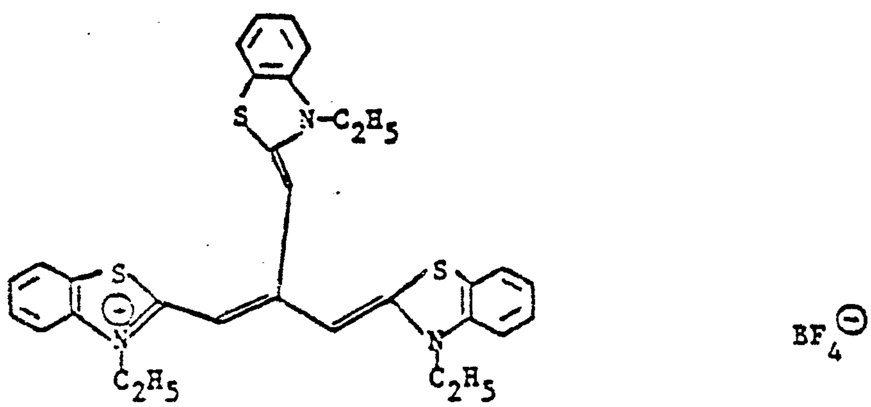

in Form dunkelgrüner, metallisch glänzender Blättchen.

Absorptionsmaximum in Methanol : $\lambda$ max = 556 nm. Weitere Charakterisierung durch 1H-NMR und Elementaranalyse.

b) Unter identischen Bedingungen wie im Beispiel 1 angegeben erfolgt die Umsetzung der Verbindung der Formel (104) mit Chlorbenzotriazol zum Farbstoff der Formel (10).

Die Ausbeute beträgt 80 %. Die Reinigung erfolgt dabei durch Lösen in Aceton und Ausfällung mit Diäthyläther mit nachfolgender Filtration.

Absorptionsmaximum in Methanol : $\lambda$ max = 632 nm, $\varepsilon = 4{,}2 \cdot 10^4$ 1 $Mol^{-1}$ $cm^{-1}$. Weitere Charakterisierung durch Absorptionsspektroskopie (UV, sichtbarer Bereich und IR), und Elementaranalyse. Die Reinheit wird durch Dünnschichtchromatographie nachgeprüft.

Analog werden Verbindungen der Formel (10) hergestellt, die als Anionen $ClO_4^{\ominus}$ und Methylsulfat $CH_3SO_4^{\ominus}$ enthalten ; ferner solche Verbindungen, die in der Methinkette bromiert sind oder am Stickstoffatom mit Methyl substituiert sind.

Beispiel 6

Farbstoff der Formel (16)

630 mg (1 mMol) der Verbindung der Formel (101) werden in 50 ml Methanol bei 60 °C gelöst. Nach Abkühlung auf Raumtemperatur wird eine Lösung von 178 mg (1 mMol) n-Bromsuccinimid in 20 ml Methanol zugetropft. Die Lösung wird während einer halben Stunde bei 20 °C gerührt und danach mit dem Rotationsverdampfer zur Trockne eingeengt. Der Rückstand wird anschliessend über eine Säule mit Kieselgel chromatographisch aufgetrennt (Fliessmittel : Chloroform/Methanol im Verhältnis 9 : 1). Man erhält die Verbindung der Formel

(16) 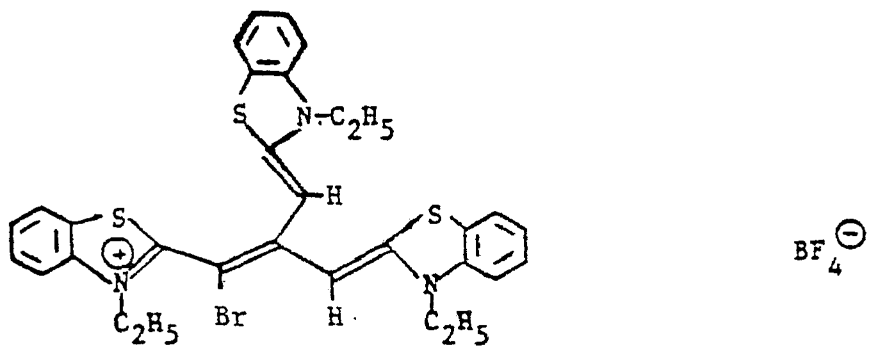

in Form blauer Kristalle.
Absorptionsmaximum : $\lambda_{max}$ = 589 nm (in Methanol)
Weitere Charakterisierung des Farbstoffes der Formel (16) durch Elementaranalyse und Brom-Bestimmung durch Röntgenfluoreszenz.

## Anwendungsbeispiele

### Beispiel 7

Eine direktpositive Emulsion, deren Wirkungsweise auf dem Prinzip der Bleichung eines Oberflächenschleiers beruht, wird hergestellt, indem man eine kubisch-monodisperse Silberjodidbromid-Emulsion in Gelatine, deren Jodidgehalt 1,6 Mol-% beträgt und wobei die mittlere Kantenlänge der würfelförmigen Kristalle 0,28 μm beträgt, bei einer Temperatur von 60 °C während 100 Minuten einer chemischen Verschleierung aussetzt. Als Verschleierungsmittel verwendet man pro Mol in der Emulsion vorhandenen Silberhalogenids 7 ml einer 0,01 %-igen Lösung von Natrium-Formaldehyd-Sulfoxylat und 14 ml einer 0,01 %-igen Lösung von Tetrachlorgold-Säure ($HAuCl_4$). Während der Verschleierung wird ein pH-Wert von 8,8 und ein pAg-Wert von 6,5 eingehalten.

Anschliessend wird die Emulsion in drei Teile geteilt und jeder Teil mit einer Lösung des chlorierten trinuklearen Cyaninfarbstoffes der Formel (5) behandelt. In den drei Teilen der Emulsion werden pro Mol Silberhalogenid 400, bzw. 467, bzw. 533 mg des Farbstoffs der Formel (5) verwendet. Anschliessend werden die Emulsionen auf einen pH-Wert von 6,0 und einen pAg-Wert von 9,3 eingestellt und schliesslich auf einer Polyesterunterlage zu je einem dünnen gleichmässigen Film vergossen und getrocknet. Die Schichtdicke wird dabei so gewählt, dass auf einen Quadratmeter der Schicht 3,2 g Silber und 4,5 g Gelatine entfallen.

Von jedem beschichteten Material wird eine Probe in einem Sensitometer mit gewöhnlichem Wolfram-Glühlicht hinter einem Stufenkeil belichtet und mit einem Entwickler der folgenden Zusammensetzung behandelt :

| | |
|---|---|
| N-Methyl-p-aminophenolsulfat | 2,0 g |
| Natriumsulfit, wasserfrei | 75,0 g |
| Hydrochinon | 8,0 g |
| Natriumcarbonat, wasserfrei | 37,5 g |
| Kaliumbromid | 2,0 g |
| Wasser ad | 3 Liter |

Die Auswertung des belichteten und entwickelten Stufenkeils ergibt folgende sensitometrischen Werte :

Tabelle II

| Vers. No. | Cyaninfarbstoff der Formel (5) (mg/Mol Silberhalogenid) | Empfindlichkeit ($S_{50}$)* | Kontrast (γ) | $D_{max}$ | $D_{min}$ |
|---|---|---|---|---|---|
| 2.1 | 400 | 1,69 | 2,4 | 3,28 | 0,02 |
| 2.2 | 467 | 1,75 | 2,2 | 3,08 | 0,02 |
| 2.3 | 533 | 1,80 | 1,9 | 2,92 | 0,02 |

Spektraler Empfindlichkeitsbereich bis 510 nm

*) In Lux · Sekunden bei 50 % der Maximaldichte,

$S_{50} = 3 - \log E$ (E gemessen in Lux · Sec.)

Die Daten zeigen, dass eine ausgezeichnete Blauempfindlichkeit des direkt-positiven Bildes mit sehr niedrigen Minimaldichten erreicht wird.

Beispiel 8

Wie im Beispiel 7 beschrieben werden direkt-positive Emulsionen mit dem bromierten trinuklearen Cyaninfarbstoff der Formel (6) hergestellt, wobei auf 1 Mol Silberhalogenid der Emulsion 333 mg, 400 mg, 467 mg, 533 mg, 600 mg und 667 mg des Farbstoffs der Formel (6) verwendet werden.

Die Emulsionen werden auf einen pH-Wert von 5,35 und einen pAg-Wert von 9,0 eingestellt und anschliessend auf einer Polyester-Unterlage zu einem dünnen, gleichmässigen Film vergossen. Die Schichtdicke wird so gewählt, dass auf einen Quadratmeter der Schicht 2,1 g Silber und 2,3 g Gelatine entfallen.

Die Belichtung und Entwicklung erfolgt dann wie in Beispiel 7 beschrieben.

Die Auswertung des belichteten und entwickelten Stufenkeils ergibt folgende sensitometrischen Werte :

Tabelle III

| Vers. No. | Cyaninfarbstoff der Formel (6) (mg/Mol Silberhalogenid) | Empfindlichkeit ($S_{50}$) | Kontrast (γ) | $D_{max}$ | $D_{min}$ |
|---|---|---|---|---|---|
| 3.1 | 333 | 1,07 | 4,2 | 3,20 | 0,01 |
| 3.2 | 400 | 1,10 | 4,2 | 3,04 | 0,01 |
| 3.3 | 467 | 1,42 | 4,2 | 3,14 | 0 |
| 3.4 | 533 | 1,73 | 4,0 | 3,10 | 0 |
| 3.5 | 600 | 1,98 | 3,6 | 3,12 | 0 |
| 3.6 | 667 | 2,30 | 2,8 | 3,12 | 0 |

Spektraler Empfindlichkeitsbereich bis 510 nm

Beispiel 9

Wie im Beispiel 7 beschrieben werden direkt-positive Emulsionen mit dem iodierten trinuklearen Cyaninfarbstoff der Formel (7) hergestellt, wobei auf 1 Mol Silberhalogenid der Emulsion 400 mg, 467 mg und 533 mg des Farbstoffs der Formel (7) verwendet werden.

Die erhaltenen Emulsionen werden wie in Beispiel 8 vergossen, belichtet und entwickelt.

Die Auswertung des belichteten und entwickelten Stufenkeils ergibt folgende sensitometrischen Werte.

Tabelle IV

| Vers. No. | Cyaninfarbstoff der Formel (7) (mg/Mol Silberhalogenid) | Empfindlichkeit ($S_{50}$) | Kontrast (γ) | $D_{max}$ | $D_{min}$ |
|---|---|---|---|---|---|
| 4.1 | 400 | 0,41 | 2,4 | 2,68 | 0,05 |
| 4.2 | 467 | 0,41 | 1,7 | 2,68 | 0,05 |
| 4.3 | 533 | 0,56 | 2,9 | 2,34 | 0.05 |

Spektraler Empfindlichkeitsbereich bis 510 nm

Beispiel 10

Wie im Beispiel 7 beschrieben, werden direkt-positive Emulsionen mit dem chlorierten trinuklearen Cyaninfarbstoff der Formel (8) hergestellt, wobei auf 1 Mol Silberhalogenid der Emulsion 400, 467 und 533 mg des Farbstoff der Formel (8) verwendet werden.

Die erhaltenen Emulsionen werden wie im Beispiel 8 vergossen, belichtet und verarbeitet.

Die Auswertung des belichteten und entwickelten Stufenkeils ergibt folgende sensitometrischen Werte :

Tabelle V

| Vers. No. | Cyaninfarbstoff der Formel (8) (mg/Mol Silberhalogenid) | Empfindlichkeit ($S_{50}$) | Kontrast (γ) | $D_{max}$ | $D_{min}$ |
|---|---|---|---|---|---|
| 5.1 | 400 | 2,18 | 2,6 | 2,60 | 0,01 |
| 5.2 | 467 | 2,23 | 2,6 | 2,72 | 0,01 |
| 5.3 | 533 | 2,33 | 2,3 | 2,60 | 0,01 |

Spektraler Empfindlichkeitsbereich bis 510 nm.

Beispiel 11

Eine kubisch-monodisperse Emulsion von Silberjodidbromid in Gelatine mit einem Jodid-Gehalt von 1,6 Mol-% und einer Kantenlänge der würfelförmigen Kristalle von 0,27 µm wird unter gleichen Bedingungen wie in Beispiel 7 beschrieben mit einem Gemisch von Natrium-Formaldehyd-Sulfoxylat und Tetrachlorgold-Säure verschleiert.

Die so erhaltene Emulsion wird in drei Portionen geteilt und jede Portion mit einer Lösung des chlorierten trinuklearen Cyaninfarbstoffs der Formel (10) behandelt, wobei auf 1 Mol Silberhalogenid der Emulsion 467 mg, 533 mg und 600 mg des Farbstoffs der Formel (10) verwendet werden.

Nach Einstellung der Emulsionen auf einen pH-Wert von 5,0 und einem pAg-Wert von 9,0 werden sie, gleich wie im Beispiel 8 beschrieben, auf eine Polyesterunterlage in dünner, gleichmässiger Schicht vergossen.

Die Belichtung und Entwicklung erfolgt dann wie in Beispiel 7 beschrieben.

Die sensitometrischen Eigenschaften sind in der folgenden Tabelle VI angegeben.

Tabelle VI

| Vers. No. | Cyaninfarbstoff der Formel (10) (mg/Mol Silberhalogenid) | Empfindlichkeit ($S_{50}$) | Kontrast (γ) | $D_{max}$ | $D_{min}$ |
|---|---|---|---|---|---|
| 6.1 | 467 | 0,40 | 2,6 | 3,20 | 0,30 |
| 6.2 | 533 | 0,67 | 2,1 | 3,02 | 0,15 |
| 6.3 | 600 | 1,06 | 1,9 | 3,02 | 0,11 |

Beispiel 12

Eine Silberjodidbromidemulsion wird in ähnlicher Weise hergestellt wie in Beispiel 7 angegeben. Die Emulsion wird in fünf verschiedene Teile aufgeteilt, die gemäss der folgenden Tabelle VII mit dem

halogenierten trinuklearen Cyaninfarbstoff der Formel (5) und zusätzlichen Anteilen des zusätzlichen Cyaninfarbstoffs der Formel (21) sensibilisiert werden. Die Gesamtmengen an Sensibilisatorfarbstoff wird bei dieser Versuchsreihe konstant auf 567 mg pro Mol Silberhalogenid in der Emulsion gehalten.

Die derart sensibilisierten Emulsionen werden auf eine Polyesterunterlage zu je einer Schicht vergossen, wobei die Silbermenge 2,0 g/m² und die Gelatinemenge 2,2 g/m² beträgt. Nach erfolgter Trocknung erhält man direktpositive photographische Schichten, die wie in Beispiel 7 angegeben belichtet und entwickelt werden. Die sensitometrischen Eigenschaften sind in der folgenden Tabelle VII angegeben.

Tabelle VII

| Vers. No. | Farbstoff der Formel (5) (mg/Mol Silberhalogenid) | Zusätzlicher Farbstoff der Formel (21) (mg/Mol Silberhalogenid) | Empfindlichkeit ($S_{50}$) | Kontrast | $D_{max}$ | $D_{min}$ |
|---|---|---|---|---|---|---|
| 7.1 | 553 | 13 | 1,39 | 2,4 | 3,02 | 0,04 |
| 7.2 | 500 | 67 | 1,45 | 2,0 | 2,96 | 0,04 |
| 7.3 | 467 | 100 | 1,45 | 2,1 | 2,80 | 0,04 |
| 7.4 | 433 | 133 | 1,42 | 2,1 | 2,88 | 0,05 |
| 7.5 | 367 | 200 | 1,70 | 1,9 | 2,78 | 0,08 |

Spektraler Empfindlichkeitsbereich bis 590 nm

## Beispiel 13

Eine Silberjodidbromidemulsion wird in ähnlicher Weise hergestellt wie in Beispiel 7 angegeben. Die Emulsion wird in sieben verschiedene Teile aufgeteilt, die gemäss der folgenden Tabelle VIII mit dem halogenierten trinuklearen Cyaninfarbstoff (5) und zusätzlichen Anteilen des Cyaninfarbstoffs der Formel (20) sensibilisiert werden. Die Gesamtmenge an Sensibilisatorfarbstoff wird konstant auf 567 mg pro Mol Silberhalogenid in der Emulsion gehalten. Die erhaltenen Emulsionen werden wie im Beispiel 8 vergossen, belichtet und verarbeitet. Die sensitometrischen Eigenschaften sind in der folgenden Tabelle VIII angegeben.

Tabelle VIII

| Vers. No. | Farbstoff der Formel (5) (mg/Mol Silberhalogenid) | Zusätzlicher Farbstoff der Formel (20) (mg/Mol Silberhalogenid) | Empfindlichkeit ($S_{50}$) | Kontrast | $D_{max}$ | $D_{min}$ |
|---|---|---|---|---|---|---|
| 8.1 | 553 | 13 | 1,81 | 1,5 | 2,72 | 0,02 |
| 8.2 | 500 | 67 | 1,84 | 1,9 | 2,76 | 0,02 |
| 8.3 | 467 | 100 | 2,00 | 1,9 | 2,66 | 0,02 |
| 8.4 | 433 | 133 | 2,05 | 1,8 | 2,58 | 0,02 |
| 8.5 | 367 | 200 | 2,10 | 1,8 | 2,70 | 0,02 |
| 8.6 | 300 | 267 | 2,05 | 2,5 | 2,78 | 0,02 |
| 8.7 | 233 | 333 | 2,10 | 2,2 | 2,66 | 0,02 |

Spektraler Empfindlichkeitsbereich bis 515 nm

Beispiel 14

Eine kubisch-monodisperse Emulsion von Silberjodidbromid in Gelatine, mit einem Jodid-Gehalt von 1,6 Mol-% und einer Kantenlänge der würfelförmigen Kristalle von 0,27 µm, wird unter gleichen Bedingungen wie in Beispiel 7 beschrieben mit einem Gemisch von Natrium-Formaldehyd-Sulfoxylat und Tetrachlorgold-Säure verschleiert. Die so erhaltene Emulsion wird in fünf Portionen geteilt und wie in der folgenden Tabelle IX angegeben mit dem bromierten trinuklearen Cyaninfarbstoff der Formel (6) und dem Sensibilisierungsfarbstoff der Formel (10) versetzt. Die Gesamtmenge an beiden Sensibilisatorfarbstoffen wird konstant auf 567 mg pro Mol Silberhalogenid in der Emulsion gehalten.

Nach Einstellung des pH-Wertes auf 5,0 und des pAg-Wertes auf 9,0 werden die Emulsionen gleich wie im Beispiel 8 auf eine Polyesterunterlage gegossen.

Die Belichtung und Entwicklung erfolgt dann wie in Beispiel 7 beschrieben. Die sensitometrischen Eigenschaften sind in der folgenden Tabelle IX angegeben.

Tabelle IX

| Vers. No. | Farbstoff der Formel (6) (mg/Mol Silberhalogenid) | Zusätzlicher Farbstoff der Formel (11) (mg/Mol Silberhalogenid) | Empfindlichkeit ($S_{50}$) | Kontrast | $D_{max}$ | $D_{min}$ |
|---|---|---|---|---|---|---|
| 9.1 | 567 | 0 | 1,78 | 3,6 | 2,96 | 0,01 |
| 9.2 | 533 | 33 | 1,79 | 2,3 | 2,80 | 0,02 |
| 9.3 | 520 | 47 | 1,78 | 2,4 | 2,90 | 0,02 |
| 9.4 | 500 | 67 | 1,75 | 2,1 | 2,80 | 0,04 |
| 9.5 | 467 | 100 | 1,83 | 2,0 | 2,80 | 0,04 |

Spektraler Empfindlichkeitsbereich bis 570 nm.

Beispiel 15

Eine direktpositive Emulsion, deren Wirkungsweise auf dem Prinzip der Bleichung eines Oberflächenschleiers beruht, wird hergestellt, indem man eine kubisch-monodisperse Silberjodidbromid-Emulsion in Gelatin, deren Jodidgehalt 1,6 Mol-% beträgt und wobei die mittlere Kantenlänge der würfelförmigen Kristalle 0,27 µm beträgt bei einer Temperatur von 60 °C während 90 Minuten einer chemischen Verschleierung aussetzt. Als Verschleierungsmittel verwendet man pro Mol in der Emulsion vorhandenen Silberhalogenids 7 ml einer 0,01 %-igen Lösung von Natrium-Formaldehyd-Sulfoxylat und 14 ml einer 0,01 %-igen Lösung von Tetrachlorgold-Säure ($HAuCl_4$). Während der Verschleierung wird ein pH-Wert von 8,8 und ein pAg-Wert von 6,8 eingehalten.

Anschliessend wird die Emulsion in drei Teile geteilt und jeder Teil mit einer Lösung des bromierten trinuklearen Cyaninfarbstoffes der Formel (14) behandelt. In den drei Teilen der Emulsion werden pro Mol Silberhalogenid 467, bzw. 533, bzw. 600 mg des Farbstoffs der Formel (14) verwendet. Anschliessend werden die Emulsionen auf einen pH-Wert von 5,0 und einen pAg-Wert von 9,0 eingestellt und schliesslich auf einer Polyesterunterlage zu je einem dünnen gleichmässigen Film vergossen und getrocknet. Die Schichtdicke wird dabei so gewählt, dass auf einen Quadratmeter der Schicht 2,2 g Silber und 2,7 g Gelatine entfallen.

Die Belichtung und Entwicklung erfolgt dann wie in Beispiel 7 beschrieben.

Die Auswertung des belichteten und entwickelten Stufenkeils ergibt folgende sensitometrischen Werte :

Tabelle X

| Vers. No. | Cyaninfarbstoff der Formel (14) (mg/Mol Silberhalogenid). | Empfindlichkeit ($S_{50}$)* | Kontrast (γ) | $D_{max}$ | $D_{min}$ |
|---|---|---|---|---|---|
| 1.1 | 467 | 1,96 | 3,9 | 3,30 | 0,01 |
| 1.2 | 533 | 1,96 | 4,0 | 3,25 | 0,01 |
| 1.3 | 600 | 2,01 | 3,8 | 3,30 | 0,01 |

Spektraler Empfindlichkeitsbereich bis 515 nm.
*) In Lux · Sekunden bei 50 % der Maximaldichte,
$S_{50}$ = 3 – log E (E gemessen in Lux · Sec.)

Die Daten zeigen, dass eine ausgezeichnete Blauempfindlichkeit des direkt-positiven Bildes mit sehr niedrigen Minimaldichten erreicht wird.

Beispiel 16

Eine kubisch-monodisperse Emulsion von Silberjodidbromid in Gelatine mit einem Jodid-gehalt von 1,6 Mol-% und einer Kantenlänge der würfelförmigen Kristalle von 0,23 μm wird unter gleichen Bedingungen wie in Beispiel 15 beschrieben verschleiert. Während der Verschleierung wird ein pH-Wert von 8,8 und ein pAg-Wert von 6,5 eingehalten.

Die so erhaltene Emulsion wird in 2 Portionen geteilt und jede Portion mit einer Lösung des bromierten trinuklearen Cyaninfarbstoffs der Formel (16) behandelt, wobei auf 1 Mol Silberhalogenid der Emulsion 533 mg und 633 mg des Farbstoffs verwendet werden.

Die erhaltenen Emulsionen werden wie im Beispiel 15 vergossen, belichtet und verarbeitet. Die Auswertung des belichteten und entwickelten Stufenkeils ergibt folgende sensitometrische Werte.

Tabelle XI

| Cyaninfarbstoff der Formel (16) (mg/Mol Silberhalogenid) | Empfindlichkeit ($S_{50}$) | Kontrast (γ) | $D_{max}$ | $D_{min}$ |
|---|---|---|---|---|
| 533 | 0,45 | 1,8 | 3,26 | 0,33 |
| 633 | 0,60 | 1,0 | 2,66 | 0,35 |

Spektraler Empfindlichkeitsbereich bis 515 nm.

**Ansprüche**

1. Direktpositives photographisches Material mit mindestens einer Schicht, die eine auf chemischem Wege oder durch Belichtung oberflächenverschleierte Silberhalogenidemulsion und einen Sensibilisator enthält, dadurch gekennzeichnet, dass der Sensibilisator ein trinuklearer Tetramethincyaninfarbstoff ist, in dem die Methinwasserstoffatome teilweise oder ganz durch Fluor-, Chlor-, Brom- oder Jodatome ersetzt sind.

2. Direktpositives photographisches Material nach Anspruch 1, dadurch gekennzeichnet, dass im trinuklearen Tetramethincyaninfarbstoff alle Methinwasserstoffatome durch Fluor-, Chlor-, Brom- oder Jodatome ersetzt sind.

3. Direktpositives photographisches Material nach Anspruch 1, dadurch gekennzeichnet, dass die Tetramethincyaninfarbstoffe den Formeln

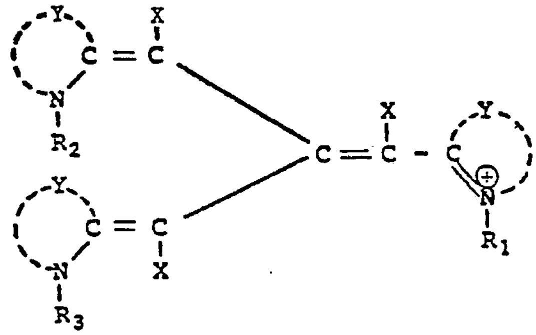

$A^{\ominus}$

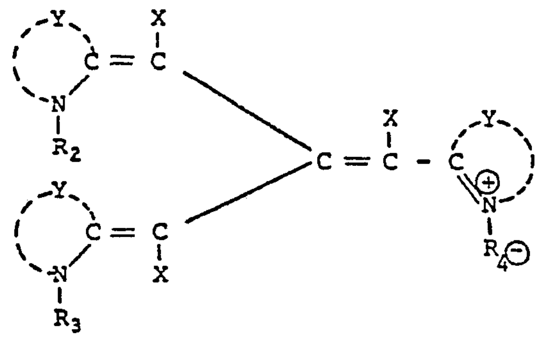

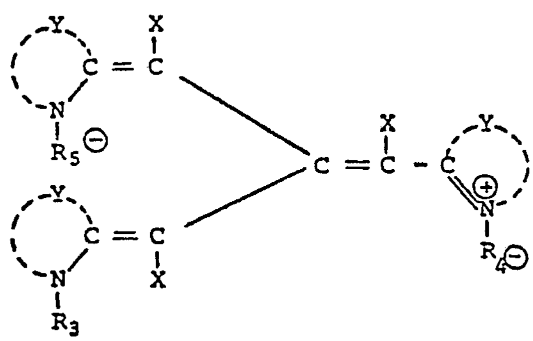

$M^{\oplus}$

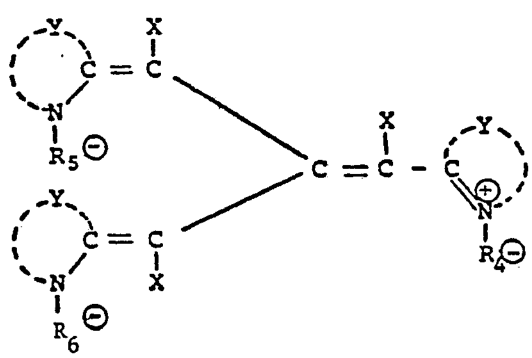

$2\ M^{\oplus}$

oder

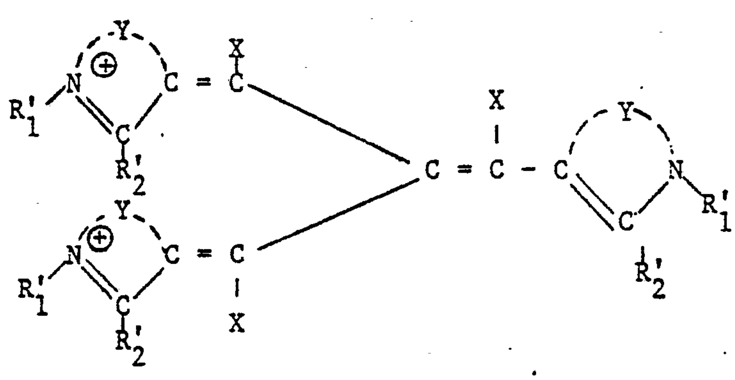

$2\ A^{\ominus}$

entsprechen, worin

Y die zur Vervollständigung eines mono- oder polyheterocyclischen Ringsystems erforderlichen Atome,

$R_1$, $R_2$ und $R_3$ je unsubstituiertes oder mit Halogen, Hydroxyl, Cyan, Alkoxy mit 1 bis 4 Kohlenstoffatomen, Carbalkoxy mit 1 bis 4 Kohlenstoffatomen im Alkoxyrest, substituiertes Alkyl mit 1 bis 20 Kohlenstoffatomen oder Alkenyl mit 2 bis 20 Kohlenstoffatomen in der Hauptkette, unsubstituiertes oder mit Halogen, Hydroxyl, Cyan, Alkoxy mit 1 bis 4 Kohlenstoffatomen, Carbalkoxy mit 1 bis 4 Kohlenstoffatomen im Alkoxyrest, Alkyl, Hydroxyalkyl oder Halogenalkyl mit 1 bis 4 Kohlenstoffatomen, Mono- oder Dialkylamino-, Amino-, Carbonamido- oder Sulfonamidogruppen substituiertes Aryl oder Aralkyl,

$R'_1$ Alkyl mit 1 bis 4 Kohlenstoffatomen,

$R'_2$ Aryl,

$R_4$, $R_5$ und $R_6$ je mit einer Carboxyl- oder Sulfogruppe substituiertes Alkyl mit 1-20 Kohlenstoffatomen oder Alkenyl mit 2 bis 20 Kohlenstoffatomen, Aryl oder Aralkyl,

X Wasserstoff, Fluor, Chlor, Brom oder Jod, wobei mindestens ein Substituent X eines der genannten Halogenatome ist,

$A^{\ominus}$ ein einwertiges Anion und

$M^{\oplus}$ ein einwertiges Kation

bedeuten.

4. Direktpositives photographisches Material nach Anspruch 3, dadurch gekennzeichnet, dass ein oder zwei Substituenten X Fluor-, Chlor-, Brom- oder Jodatome sind.

5. Direktpositives photographisches Material nach Anspruch 3, dadurch gekennzeichnet, dass die Substituenten X Fluor-, Chlor-, Brom- oder Jodatome sind.

6. Direktpositives photographisches Material nach einem der Ansprüche 3 bis 5, dadurch gekennzeichnet, dass das heterocyclische Ringsystem den Formeln

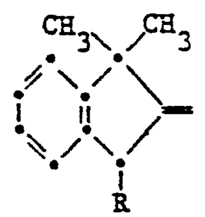 , 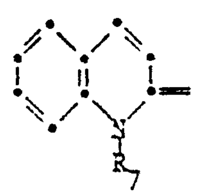 , 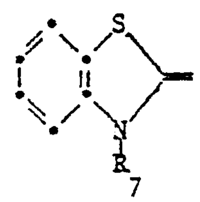 ,

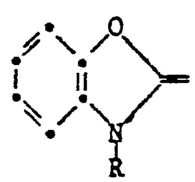 , 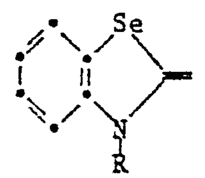 ,

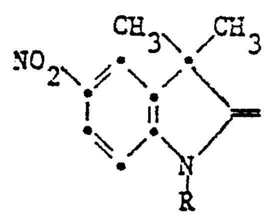 , 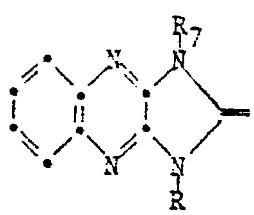 , 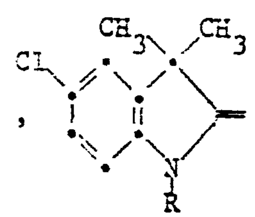 ,

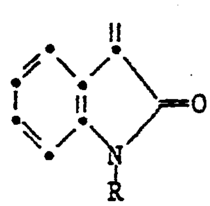 oder 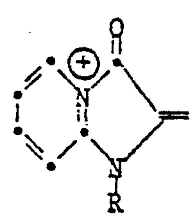

entspricht, worin R einen der im Anspruch 3 genannten Reste $R_1$ bis $R_6$ und $R_7$ Alkyl mit 1 bis 4 Kohlenstoffatomen bedeuten.

7. Direktpositives photographisches Material nach einem der Ansprüche 3 bis 5, dadurch gekennzeichnet, dass das heterocyclische Ringsystem den Formeln

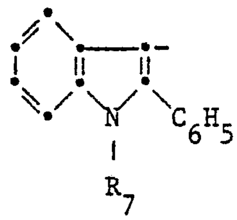
,
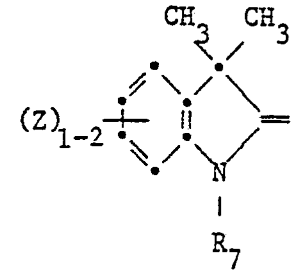
,

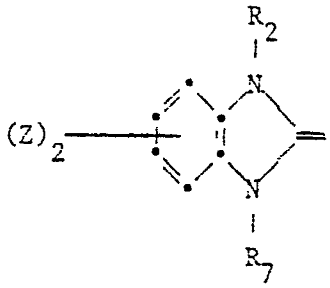
oder
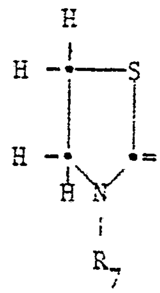

entspricht, worin $R_7$ Alkyl mit 1 bis 4 Kohlenstoffatomen und Z Fluor, Chlor, Brom oder Methoxy ist.

8. Direktpositives photographisches Material nach Anspruch 1, dadurch gekennzeichnet, dass es in mindestens einer lichtempfindlichen, Silberhalogenid enthaltenden Schicht neben einem teilweise oder ganz halogenierten trinuklearen Tetramethincyaninfarbstoff noch mindestens einen spektralen Sensibilisierungsfarbstoff enthält.

9. Direktpositives photographisches Material nach Anspruch 8, dadurch gekennzeichnet, dass der zusätzliche Sensibilisierungsfarbstoff ein saurer oder basischer Cyaninfarbstoff ist, der gegebenenfalls substituierte Benzimidazol-, Benzoxazol-, Benzthiazol-, Benzselenazol-, Indol- und/oder Chinolinreste enthält.

10. Verwendung des photographischen Materials nach einem der Ansprüche 1 bis 9 zur Herstellung direktpositiver Bilder.

11. Trinukleare Tetramethincyaninfarbstoffe, in denen mindestens eines der Methinwasserstoffatome durch Fluor-, Chlor-, Brom- oder Jodatome ersetzt ist.

12. Trinukleare Tetramethincyaninfarbstoffe nach Anspruch 11, dadurch gekennzeichnet, dass ein oder zwei Methinwasserstoffatome durch Fluor-, Chlor-, Brom- oder Jodatome ersetzt sind.

13. Trinukleare Tetramethincyaninfarbstoffe nach Anspruch 11, dadurch gekennzeichnet, dass alle Methinwasserstoffatome durch Fluor-, Chlor-, Brom- oder Jodatome ersetzt sind.

14. Halogenierte trinukleare Tetramethincyaninfarbstoffe nach Anspruch 11, dadurch gekennzeichnet, dass sie den Formeln

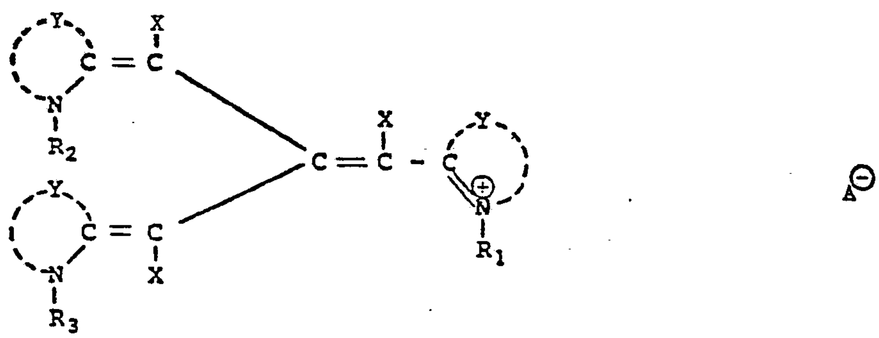

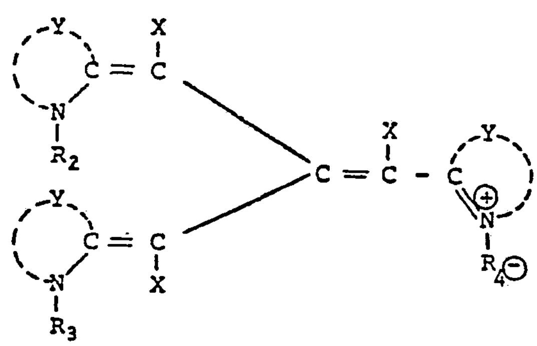

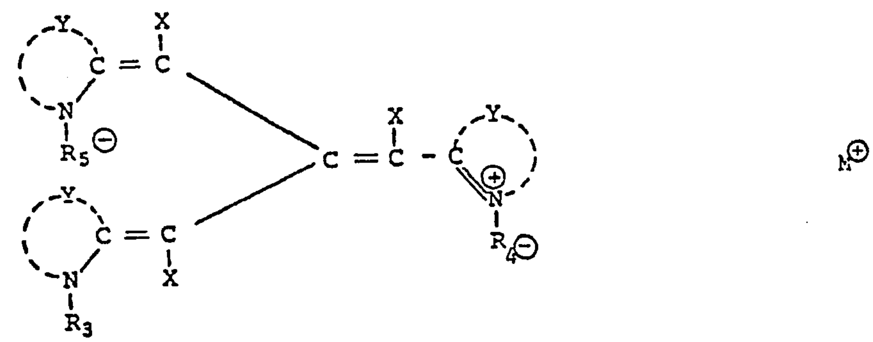

oder

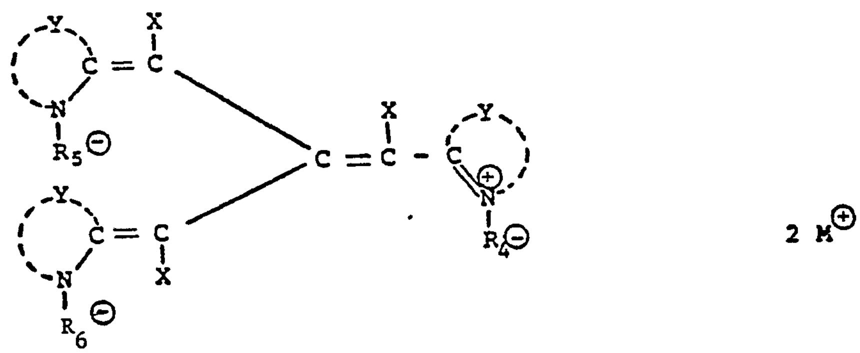

oder

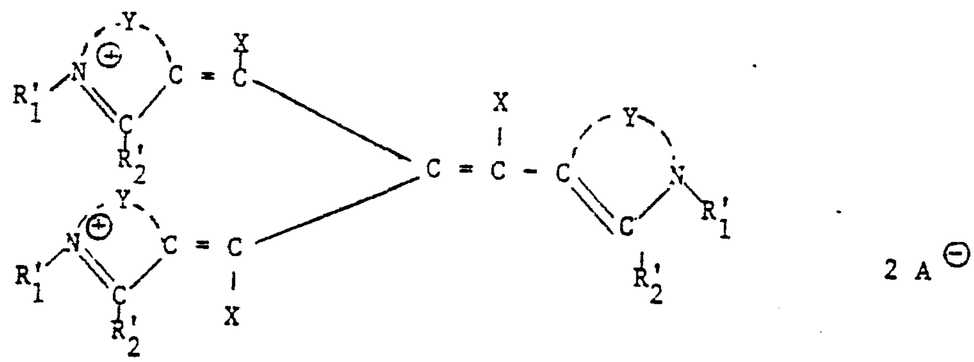

entsprechen, worin

Y die zur Vervollständigung eines mono- oder polyheterocyclischen Ringsystems erforderlichen Atome,

$R_1$, $R_2$ und $R_3$ je unsubstituiertes oder mit Halogen, Hydroxyl, Cyan, Alkoxy mit 1 bis 4 Kohlenstoffatomen, Carbalkoxy mit 1 bis 4 Kohlenstoffatomen im Alkoxyrest, substituiertes Alkyl mit 1 bis 20 Kohlenstoffatomen oder Alkenyl mit 2 bis 20 Kohlenstoffatomen in der Hauptkette, unsubstituiertes oder mit Halogen, Hydroxyl, Cyan, Alkoxy mit 1 bis 4 Kohlenstoffatomen, Carbalkoxy mit 1 bis 4 Kohlenstoffatomen im Alkoxyrest, Alkyl, Hydroxyalkyl oder Halogenalkyl mit 1 bis 4 Kohlenstoffatomen, Mono- oder Dialkylamino-, Amino-, Carbonamido- oder Sulfonamidogruppen substituiertes Aryl oder Aralkyl,

$R'_1$ Alkyl und 1 bis 4 Kohlenstoffatomen,

$R'_2$ Aryl,

$R_4$, $R_5$ und $R_6$ je mit einer Carboxyl- oder Sulfogruppe substituiertes Alkyl oder Alkenyl mit 1 bis 20 Kohlenstoffatomen, Aryl oder Aralkyl,

X Wasserstoff, Fluor, Chlor, Brom oder Jod, wobei mindestens ein Substituent X eines der genannten Halogenatome ist,

$A^\ominus$ ein einwertiges Anion und

$M^\oplus$ ein einwertiges Kation

bedeuten.

15. Halogenierte trinukleare Tetramethincyaninfarbstoffe nach Anspruch 14, dadurch gekennzeichnet, dass die Substituenten X Fluor, Chlor, Brom oder Jod bedeuten.

16. Tetramethincyaninfarbstoffe nach einem der Ansprüche 14 und 15, dadurch gekennzeichnet, dass das heterocylische Ringsystem den Formeln

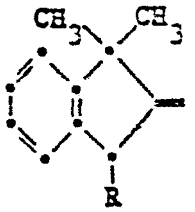 , 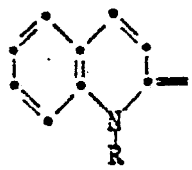 , 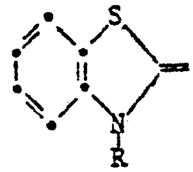 ,

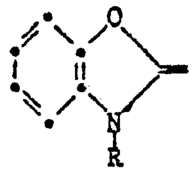 , 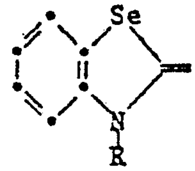 ,

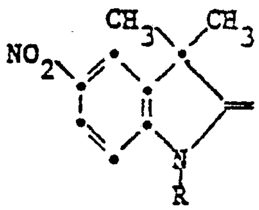 , 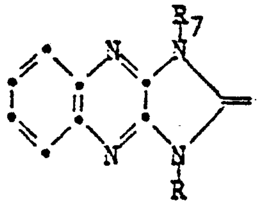 , 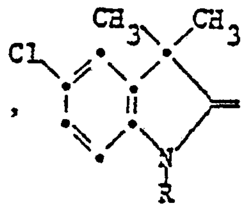 ,

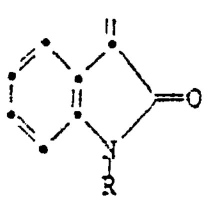 oder 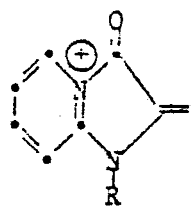

entspricht, worin R einen der im Anspruch 19 genannten Reste $R_1$ bis $R_6$ und $R_7$ Alkyl mit 1 bis 4 Kohlenstoffatomen bedeuten.

17. Tetramethincyaninfarbstoffe nach einem der Ansprüche 14 und 15, dadurch gekennzeichnet, dass das heterocyclische Ringsystem den Formeln

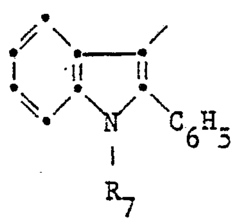 , 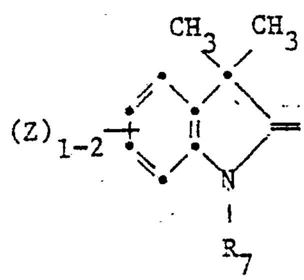

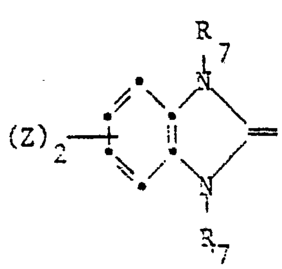 oder 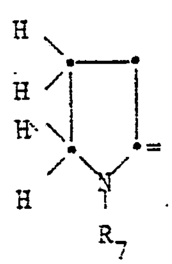

entspricht, worin $R_7$ Alkyl mit 1 bis 4 Kohlenstoffatomen und Z Fluor, Chlor, Brom oder Methoxy ist.

18. Verfahren zur Herstellung von halogenierten trinuklearen Tetramethincyaninfarbstoffen nach einem der Ansprüche 11 bis 17, dadurch gekennzeichnet, dass man trinukleare Tetramethincyaninfarbstoffe halogeniert.

19. Verwendung der halogenierten trinuklearen Tetramethincyaninfarbstoffe nach einem der Ansprüche 11 bis 17 als Sensibilisatoren in direktpositiven photographischen Materialien.

**Claims**

1. A direct-positive photographic material which has at least one layer which contains a silver halide emulsion, which has been surface-fogged by chemical means or by exposure, and a sensitiser, wherein the sensitiser is a trinuclear tetramethinecyanine dye in which all or some of the methine hydrogen atoms have been replaced by fluorine, chlorine, bromine or iodine atoms.

2. A direct-positive photographic material according to claim 1, wherein all methine hydrogen atoms in the trinuclear tetramethinecyanine dye have been replaced by fluorine, chlorine, bromine or iodine atoms.

3. A direct-positive photographic material according to claim 1, wherein the tetramethinecyanine dye has the formula

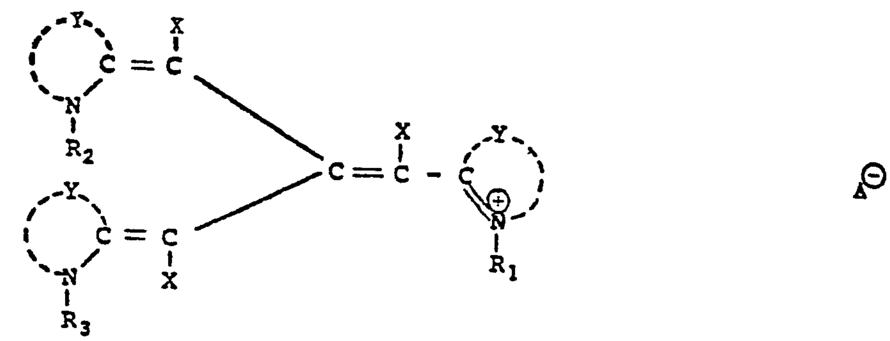

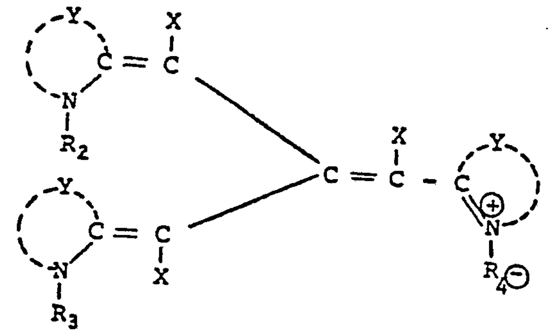

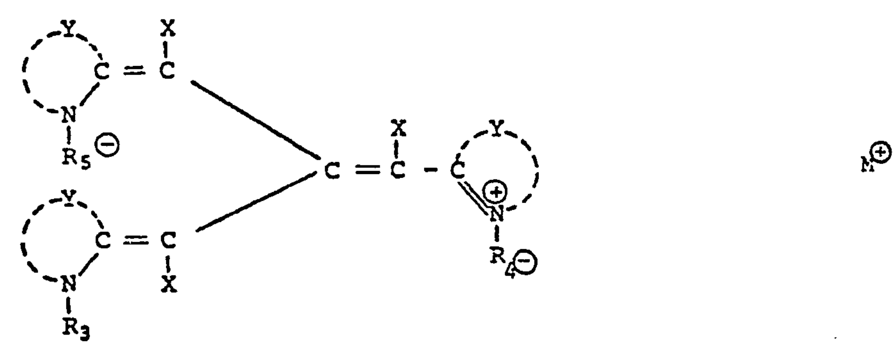

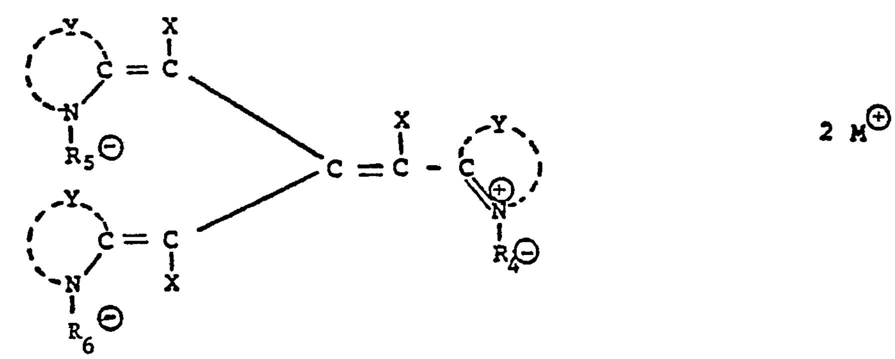

or

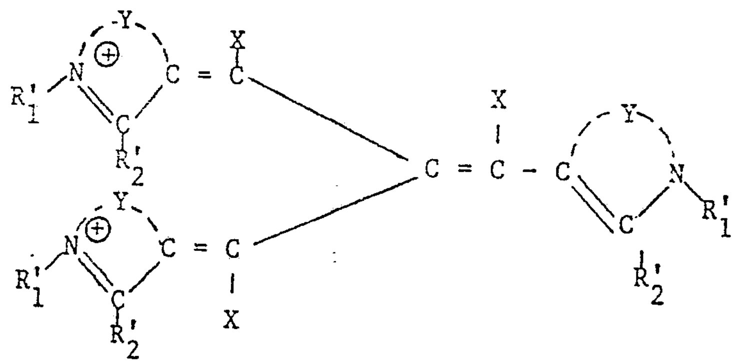

2 $A^{\ominus}$

in which

Y represents the atoms required to complete a monoheterocyclic or poly-heterocyclic ring system,

$R_1$, $R_2$ and $R_3$ are each alkyl having 1 to 20 carbon atoms or alkenyl having 2 to 20 carbon atoms in the main chain, these radicals being unsubstituted or substituted by halogen, hydroxyl, cyano, alkoxy having 1 to 4 carbon atoms or carbalkoxy having 1 to 4 carbon atoms in the alkoxy moiety, or aryl or aralkyl which are unsubstituted or substituted by halogen, hydroxyl, cyano, alkoxy having 1 to 4 carbon atoms, carbalkoxy having 1 to 4 carbon atoms in the alkoxy radical, alkyl, hydroxyalkyl or haloalkyl having 1 to 4 carbon atoms or mono- or dialkylamino, amino, carboxamido or sulfonamido groups,

$R'_1$ is alkyl having 1 to 4 carbon atoms,

$R'_2$ is aryl,

$R_4$, $R_5$ and $R_6$ are each alkyl of 1 to 20 or alkenyl of 2 to 20 carbon atoms, aryl or aralkyl, these radicals being substituted by a carboxyl or sulfo group,

X is hydrogen, fluorine, chlorine, bromine or iodine, with at least one substituent X being one of the said halogen atoms,

$A^{\ominus}$ is a monovalent anion and

$M^{\oplus}$ is a monovalent cation.

4. A direct-positive photographic material according to claim 3, wherein one or two substituents X are fluorine, chlorine, bromine or iodine atoms.

5. A direct-positive photographic material according to claim 3, wherein all the substituents X are fluorine, chlorine, bromine or iodine atoms.

6. A direct-positive photographic material according to any one of claims 3 to 5, wherein the heterocyclic ring system has the formula

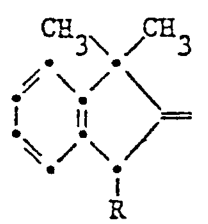 , 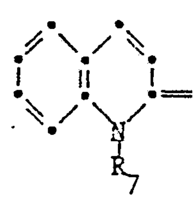 , 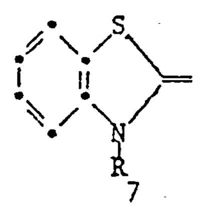 ,

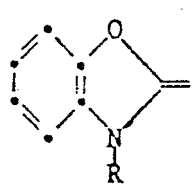 , 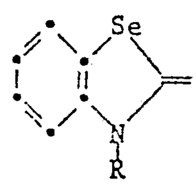 ,

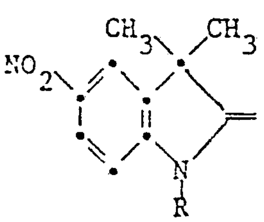 , 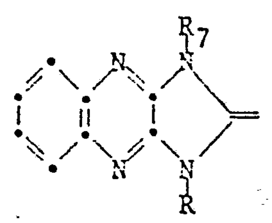 , 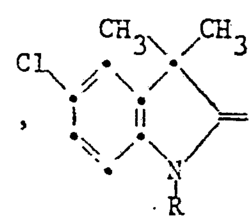 ,

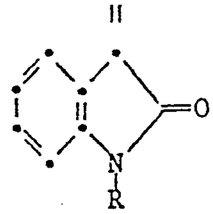

or

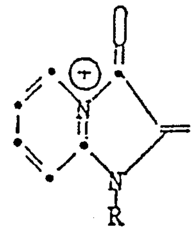

in which R is one of the radicals $R_1$ to $R_6$ defined in claim 3 and $R_7$ is alkyl having 1 to 4 carbon atoms.

7. A direct-positive photographic material according to any one of claims 3 to 5, wherein the heterocyclic ring system has the formula

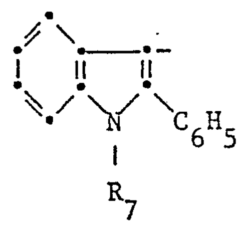

,

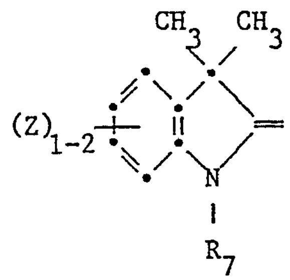

,

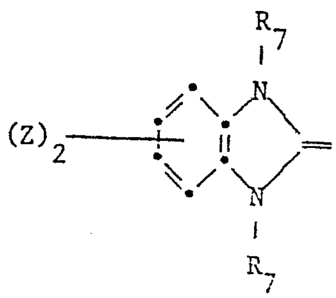

or

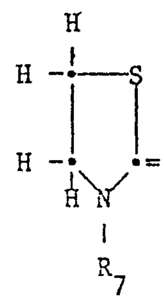

in which $R_7$ is alkyl having 1 to 4 carbon atoms and Z is fluorine, chlorine, bromine or methoxy.

8. A direct-positive photographic material according to claim 1, which contains, in at least one light-sensitive layer containing silver halide at least one other spectral sensitising dye in addition to the partially or completely halogenated trinuclear tetramethinecyanine dye.

9. A direct-positive photographic material according to claim 8, wherein the additional sensitising dye is an acid or basic cyanine dye which contains substituted or unsubstituted benzimidazole, benzoxazole, benzthiazole, benzselenazole, indole and/or quinoline radicals.

10. The use of the photographic material according to any one of claims 1 to 9 for the production of direct-positive images.

11. A trinuclear tetramethinecyanine dye in which at least one of the methine hydrogen atoms is replaced by fluorine, chlorine, bromine or iodine atoms.

12. A trinuclear tetramethinecyanine dye according to claim 11, wherein one or two methine hydrogen atoms are replaced by fluorine, chlorine, bromine or iodine atoms.

13. A trinuclear tetramethinecyanine dye according to claim 11, wherein all the methine hydrogen atoms are replaced by fluorine, chlorine, bromine or iodine atoms.

14. A halogenated trinuclear tetramethinecyanine dye according to claim 11, which has the formula

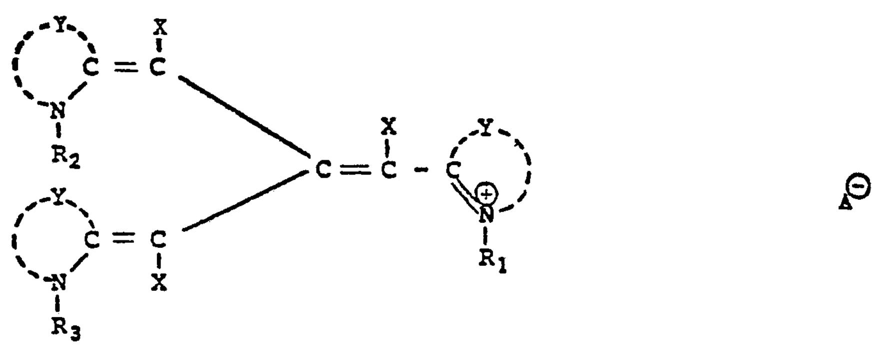

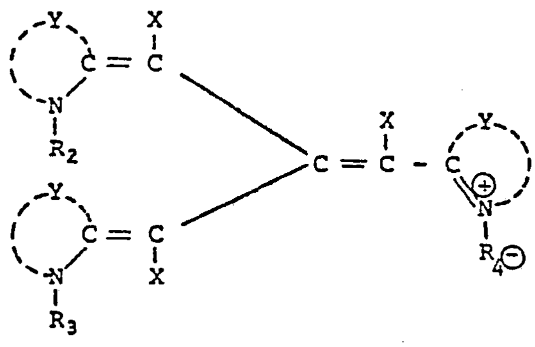

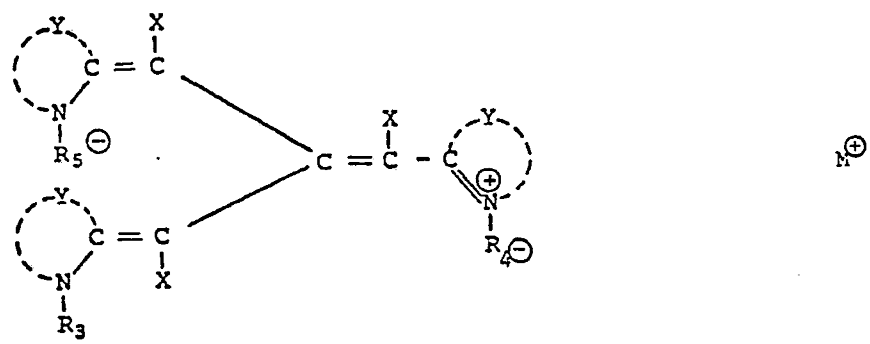

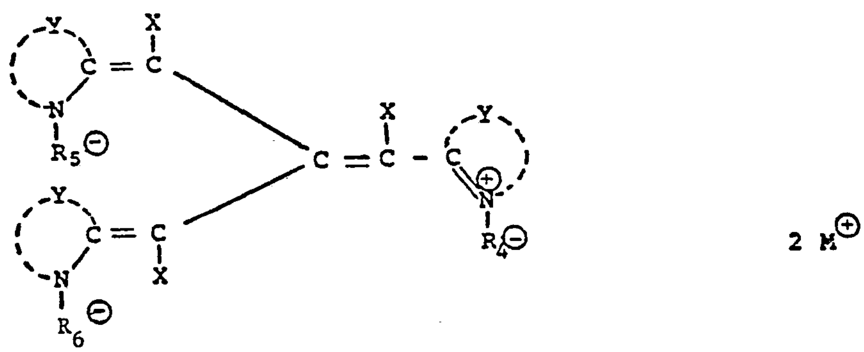

or

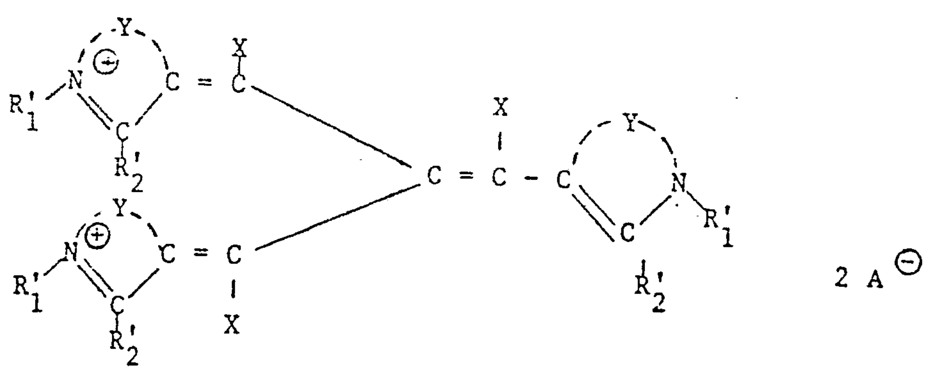

in which

Y represents the atoms required to complete a monoheterocyclic or poly-heterocyclic ring system,

$R_1$, $R_2$ and $R_3$ are each alkyl having 1 to 20 carbon atoms or alkenyl having 2 to 20 carbon atoms in the main chain, these radicals being unsubstituted or substituted by halogen, hydroxyl, cyano, alkoxy having 1 to 4 carbon atoms or carbalkoxy having 1 to 4 carbon atoms in the alkoxy radical, or aryl or aralkyl which are unsubstituted or substituted by halogen, hydroxyl, cyano, alkoxy having 1 to 4 carbon atoms, carbalkoxy having 1 to 4 carbon atoms in the alkoxy radical, alkyl, hydroxyalkyl or haloalkyl having 1 to 4 carbon atoms or mono- or di-alkylamino, amino, carboxamido or sulfonamido groups,

$R'_1$ is alkyl having 1 to 4 carbon atoms,

$R'_2$ is aryl,

$R_4$, $R_5$ and $R_6$ are each alkyl or alkenyl having 1(2) to 20 carbon atoms, aryl or aralkyl, these radicals

being substituted by a carboxyl or sulfo group,

X is hydrogen, fluorine, chlorine, bromine or iodine, with at least one substituent X being one of the said halogen atoms,

$A^{\ominus}$ is a monovalent anion and

$M^{\oplus}$ is a monovalent cation.

15. A halogenated trinuclear tetramethinecyanine dye according to claim 14, wherein the substituents X are fluorine, chlorine, bromine or iodine.

16. A tetramethinecyanine dye according to either of claims 14 or 15, wherein the heterocyclic ring system has the formula

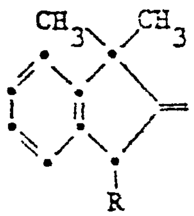 , 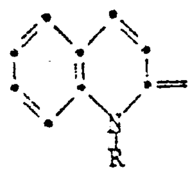 , 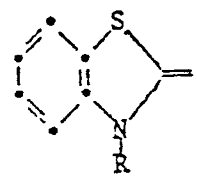 ,

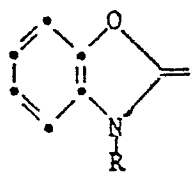 , 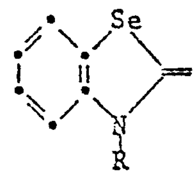 .,

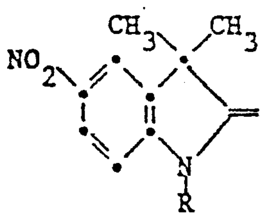 , 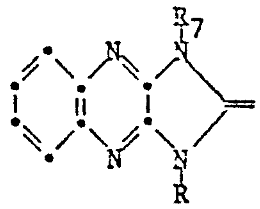 , 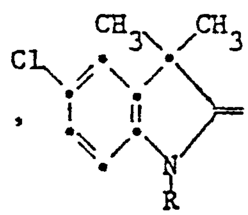 ,

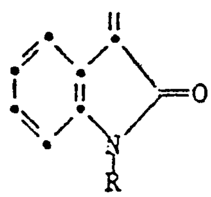 or 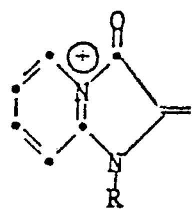

in which R is one of the radicals $R_1$ to $R_6$ defined in claim 14 and $R_7$ is alkyl having 1 to 4 carbon atoms.

17. A tetramethinecyanine dye according to either of claims 14 and 15, wherein the heterocyclic ring system has the formula

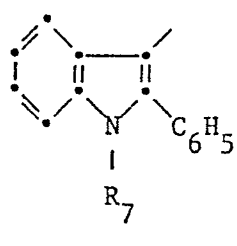 , 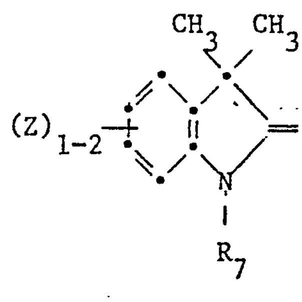 ,

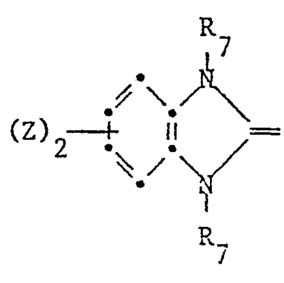 or 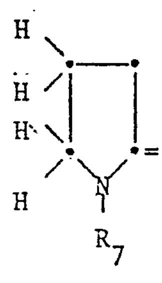

in which $R_7$ is alkyl having 1 to 4 carbon atoms and Z is fluorine, chlorine, bromine or methoxy.

18. A process for the preparation of a halogenated trinuclar tetramethinecyanine dye according to any one of claims 11 to 17, which comprises halogenating a trinuclear tetramethinecyanine dye.

19. The use of a halogenated trinuclear tetramethinecyanine dye according to any one of claims 11 to 17 as a sensitiser in direct-positive photographic materials.

**Revendications**

1. Matériau photographique positif direct avec au moins une couche qui contient une émulsion d'halogénure d'argent voilée en surface par voie chimique, ou par exposition à la lumière, et un sensibilisateur, caractérisé par le fait que le sensibilisateur est un colorant de tétraméthinecyanine à trois noyaux, dans lequel les atomes d'hydrogène méthinique sont remplacés partiellement ou totalement par des atomes de fluor, de chlore, de brome ou d'iode.

2. Matériau photographique positif direct selon la revendication 1, caractérisé par le fait que dans le colorant de tétraméthinecyanine à trois noyaux, tous les atomes d'hydrogène méthinique sont remplacés par des atomes de fluor, de chlore, de brome ou d'iode.

3. Matériau photographique positif direct selon la revendication 1, caractérisé par le fait que les colorants de tétraméthinecyanines correspondent aux formules :

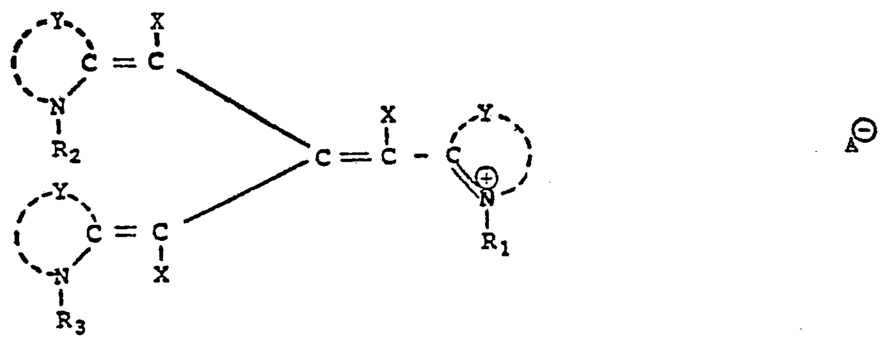

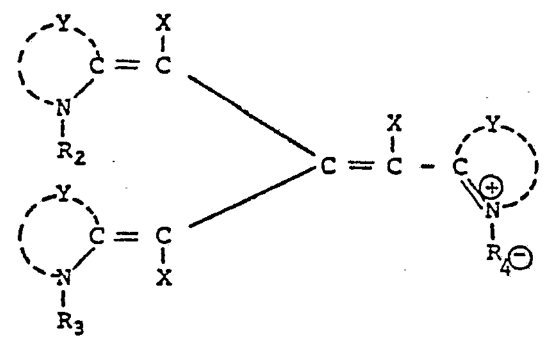

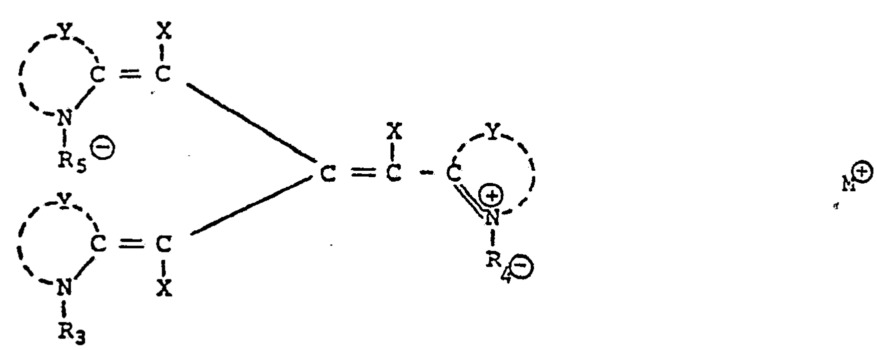

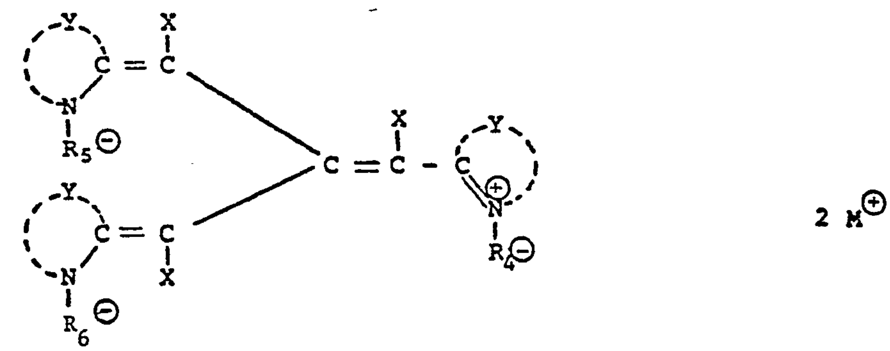

ou

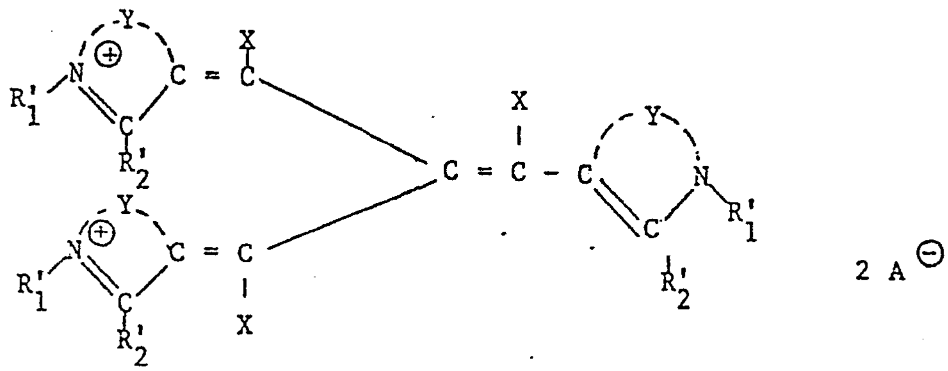

dans lesquelles :

Y représente les atomes nécessaires pour compléter un système à noyaux, monohétérocyclique ou polyhétérocyclique,

$R_1$, $R_2$ et $R_3$ sont chacun un reste alkyle avec 1 à 20 atomes de carbone ou alcényle avec 2 à 20 atomes de carbone, dans la chaîne principale, non substitués ou substitués avec des groupes halogéno, hydroxyle, cyano, alcoxy ayant 1 à 4 atomes de carbone, carbalcoxy ayant 1 à 4 atomes de carbone dans le reste alcoxy, un reste aryle ou aralkyle, non substitués ou substitués avec des groupes halogéno, hydroxyle, cyano, alcoxy ayant 1 à 4 atomes de carbone, carbalcoxy ayant 1 à 4 atomes de carbone dans le reste alcoxy, alkyle, hydroxyalkyle ou halogéno-alkyle ayant 1 à 4 atomes de carbone, mono ou di-alkylamino, amino, carbonamido ou sulfamido.

$R'_1$ est un reste alkyle ayant 1 à 4 atomes de carbone,

$R'_2$ est un reste aryle,

$R_4$, $R_5$ et $R_6$ sont chacun un reste alkyle ou alcényle ayant 1(2) à 20 atomes de carbone aryle ou aralkyle, substitués avec un groupe carboxyle ou sulfo,

X est de l'hydrogène, du fluor, du chlore, du brome ou de l'iode, au moins un substituant X étant un des atomes d'halogène mentionnés,

$A^{\ominus}$ est un anion monovalent et

$M^{\oplus}$ est un cation monovalent.

4. Matériau photographique positif direct selon la revendication 3, caractérisé par le fait qu'un ou deux substituants X est, ou sont, des atomes de fluor, de chlore, de brome ou d'iode.

5. Matériau photographique positif direct selon la revendication 3, caractérisé par le fait que tous les substituants X sont des atomes de fluor, de chlore, de brome ou d'iode.

6. Matériau photographique positif direct selon l'une des revendications 3 à 5, caractérisé par le fait que le système à noyaux hétérocyclique, correspond aux formules :

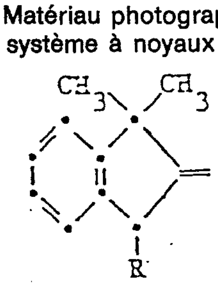 , 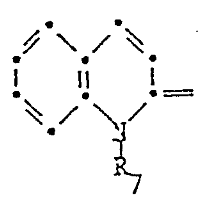 , 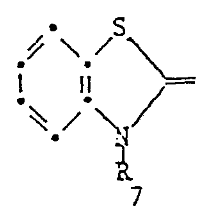 ,

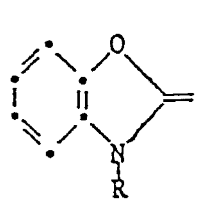 , 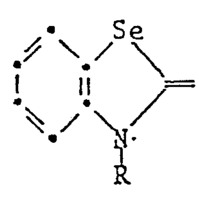 ,

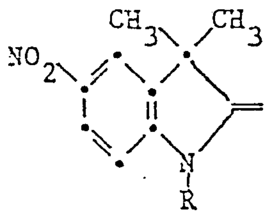, 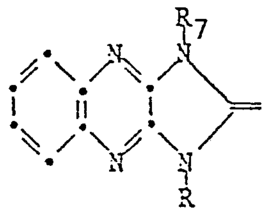, 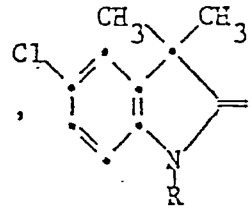,.

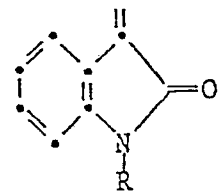 ou 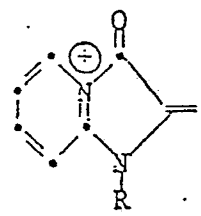

dans lesquelles R est un des restes mentionnés dans la revendication 3 ; $R_1$ à $R_6$ et $R_7$ sont des groupes alkyle ayant 1 à 4 atomes de carbone.

7. Matériau photographique positif direct selon l'une des revendications 3 à 5, caractérisé par le fait que le système à noyaux, hétérocyclique, correspond aux formules :

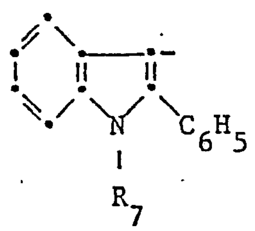, 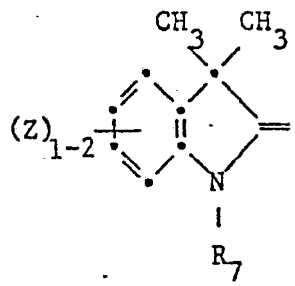,

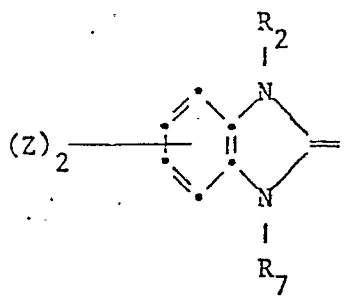 ou 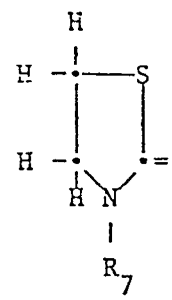

dans lesquelles $R_7$ est un reste alkyle ayant 1 à 4 atomes de carbone et Z est du fluor, du chlore, du brome ou le groupe méthoxy.

8. Matériau photographique positif direct selon la revendication 1, caractérisé par le fait que dans au moins une couche renfermant de l'halogénure d'argent photosensible, il contient à côté d'un colorant de tétraméthinecyanine à trois noyaux, partiellement ou totalement halogénée, encore au moins un colorant de sensibilisation spectrale.

9. Matériau photographique positif direct selon la revendication 8, caractérisé par le fait que le colorant de sensibilisation supplémentaire est un colorant de cyanine acide ou basique qui contient éventuellement substitués, des restes benzimidazole, benzoxazole, benzothiazole, benzosélénazole, indole et/ou quinoline.

10. Utilisation du matériau photographique selon l'une des revendications 1 à 9, pour la production des images positives directes.

11. Colorants de tétraméthinecyanines à trois noyaux dans lesquels au moins un des atomes d'hydrogène méthinique est remplacé par des atomes de fluor, de chlore, de brome ou d'iode.

12. Colorants de tétraméthinecyanines à trois noyaux selon la revendication 11, caractérisés par le fait qu'un ou deux atomes d'hydrogène méthinique sont remplacés par des atomes de fluor, de chlore, de brome ou d'iode.

13. Colorants de tétraméthinecyanines à trois noyaux selon la revendication 11, caractérisés par le fait que tous les atomes d'hydrogène méthinique sont remplacés par des atomes de fluor, de chlore, de brome ou d'iode.

14. Colorants de tétraméthinecyanines halogénées à trois noyaux selon la revendicaton 11, caractérisés par le fait qu'ils correspondent aux formules :

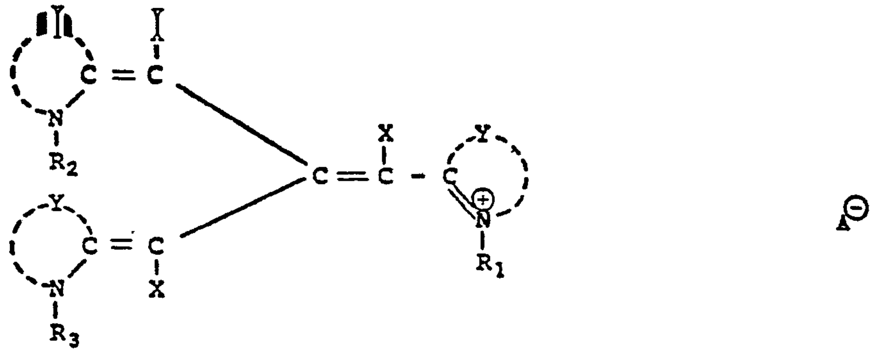

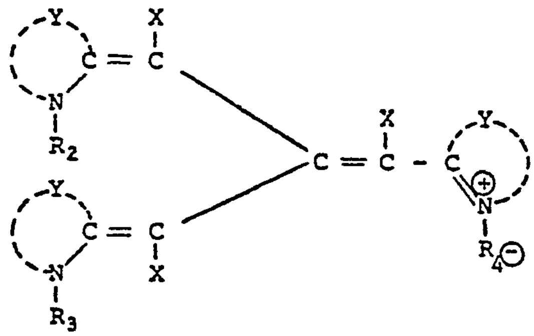

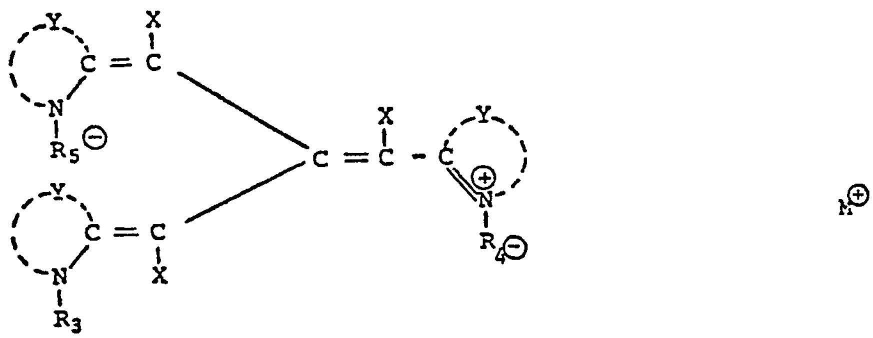

ou

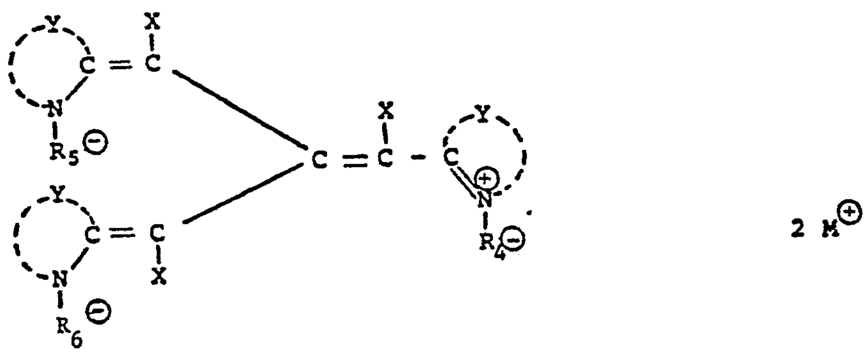

ou

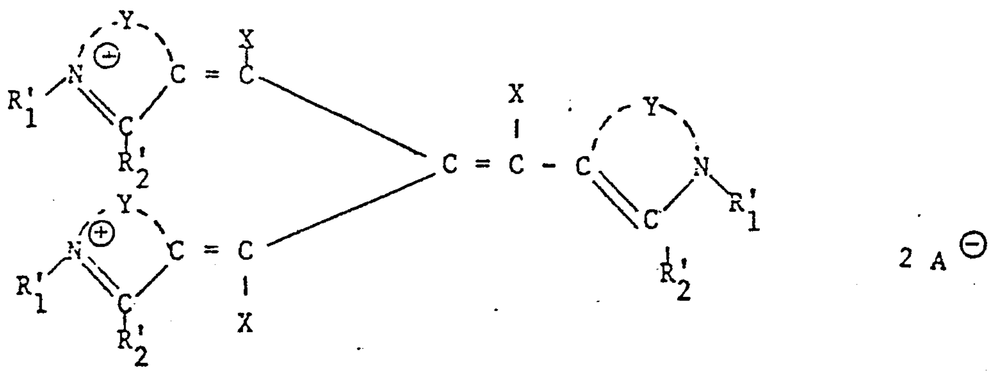

dans lesquelles :

Y représente les atomes nécessaires pour compléter un système à noyaux, monohétérocyclique ou polyhétérocyclique,

$R_1$, $R_2$ et $R_3$ sont chacun un reste alkyle ayant 1 à 20 atomes de carbone ou alcényle ayant 2 à 20 atomes de carbone, dans la chaîne principale, non substitués ou substitués par des groupes halogéno, hydroxyle, cyano, alcoxy ayant 1 à 4 atomes de carbone, carbalcoxy ayant 1 à 4 atomes de carbone dans le reste alcoxy, un reste aryle ou aralkyle, non substitués ou substitués par des groupes halogéno, hydroxyle, cyano, alcoxy ayant 1 à 4 atomes de carbone, carbalcoxy ayant 1 à 4 atomes de carbone dans le reste alcoxy, alkyle, hydroxyalkyle ou halogénoalkyle avec 1 à 4 atomes de carbone, mono ou di-alkylamino, amino, carbonamido ou sulfamido,

$R'_1$ est un reste alkyle ayant 1 à 4 atomes de carbone,

$R'_2$ est un reste aryle,

$R_4$, $R_5$ et $R_6$ sont chacun un reste alkyle ou alcényle ayant 1 (2) à 20 atomes de carbone, aryle ou aralkyle, substitués par un groupe carboxyle ou sulfo,

X est de l'hydrogène, du fluor, du chlore, du brome ou de l'iode, au moins un substituant X étant un des atomes d'halogène mentionnés,

$A^{\ominus}$ est un anion monovalent, et

$M^{\oplus}$ est un cation monovalent.

15. Colorants de tétraméthinecyanines halogénées à trois noyaux selon la revendication 14, caractérisés par le fait que les substituants X sont du fluor, du chlore, du brome ou de l'iode.

16. Colorants de tétraméthinecyanines selon l'une des revendications 14 et 15, caractérisés par le fait que le système à noyaux, hétérocyclique correspond aux formules :

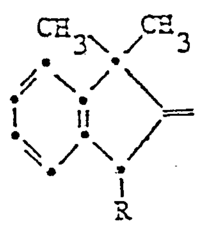 , 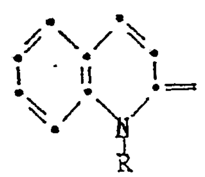 , 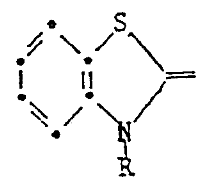 ,

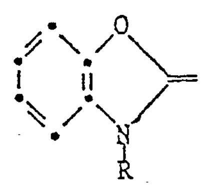 , 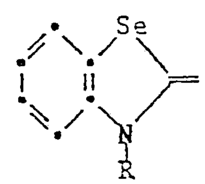 ,

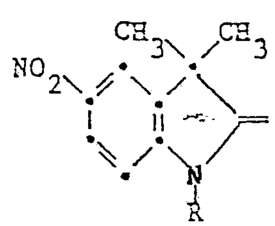 ; 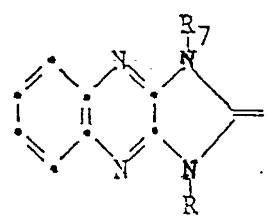 , 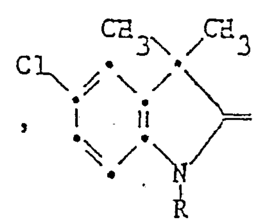 ,

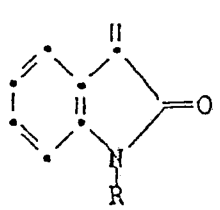 ou 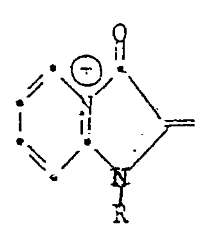

dans lesquelles R est un des restes mentionnés dans la revendication 19, $R_1$ à $R_6$ et $R_7$ sont des restes alkyle ayant 1 à 4 atomes de carbone.

17. Colorants de tétraméthinecyanines selon l'une des revendications 14 et 15, caractérisés par le fait que le système à noyaux, hétérocyclique, correspond aux formules :

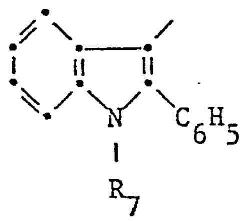
,
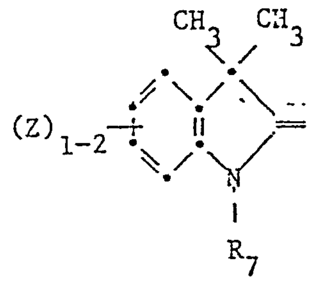
,

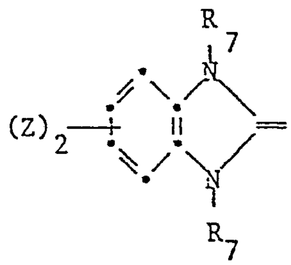
ou
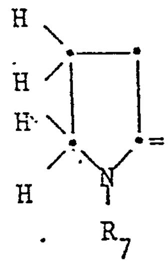
.

dans lesquelles $R_7$ est un reste alkyle ayant 1 à 4 atomes de carbone, ét Z est du fluor, du chlore, du brome ou le groupe méthoxy.

18. Procédé pour la préparation de colorants de tétraméthinecyanines halogénées à trois noyaux selon l'une des revendications 11 à 17, caractérisé par le fait qu'on halogène des colorants de tétraméthinecyanines à trois noyaux.

19. Utilisation des colorants de tétraméthinecyanines halogénées à trois noyaux selon l'une des revendications 11 à 17, comme sensibilisateurs dans des matériaux photographiques positifs directs.